# EUROPEAN PATENT APPLICATION

(11) **EP 3 771 330 A1**
(43) Date of publication of application: **03.02.2021**
(21) Application number: 19189075.5
(22) Date of filing: 30.07.2019
(51) Int. Cl.: A01G 7/04, A01G 22/00, A01G 7/02

(54) **INDOOR METHOD FOR PRODUCING CANNABIS MATERIAL**

(71) Applicant: Green Medicals MKD, 2300 Kocani (MK)
(72) Inventor: Milenkovski, Philipp Adalbert Marx, 60385 Frankfurt am Main (DE); Heidacker, Max Nico Roland, 65474 Bischofsheim (DE)
(74) Representative: Fuchs Patentanwälte Partnerschaft mbB

(57) **Abstract**

The present invention relates to an indoor method for producing cannabis material. Cannabis material comprises for example cannabis resin, cannabis flower, cannabis oil or cannabis tincture. Further, the present invention relates to cannabis materials, and uses of the cannabis materials. The method comprises a growth phase, a flowering phase, and harvesting. Optionally the method may include drying, sterilization and/or extraction of cannabis material. In a preferred embodiment, the method comprises a growth phase, a flowering phase, harvesting, drying and sterilization of cannabis material, and optionally extraction of cannabis material.

## Description

The present invention relates to an indoor method for producing cannabis material. Cannabis material comprises for example cannabis resin, cannabis flower, cannabis oil or cannabis tincture.

Further, the present invention relates to cannabis materials, and uses of the cannabis materials. The method comprises a growth phase, a flowering phase, and harvesting. Optionally, the method may include drying, sterilization and/or extraction of cannabis material. In a preferred embodiment, the method comprises a growth phase, a flowering phase, harvesting, drying and sterilization of cannabis material, and optionally extraction of cannabis material.

### Background of the invention

Cannabis is more and more recognized as beneficial in medical applications. The number of countries that legalized the medical use of cannabis increased during the last years. Therefore, there is an increased need for the production of cannabis material suitable for medical applications.

The cannabis plant belongs to the genus *Cannabis.* There are varieties of different cannabis plant strains, which are suitable for the production of cannabis for medicinal applications. Cannabis material for medical use may be produced from dried cannabis flowers or from extracts of cannabis flowers. A cannabis flower can comprise several hundred different active ingredients, among them plenty of different terpenes and cannabinoids. One of the most active cannabinoids is tetrahydrocannabinol (THC). Other cannabinoids are for example cannabidiol (CBD), cannabinol (CBN), cannabicyclol (CBL), cannabichromene (CBC), cannabigerol (CBG) and delta-8-tetrahydrocannabinol. Terpenes produced by the cannabis plant can influence the physiological effect of cannabinoids. Cannabis material is useful in the treatment of several diseases such as multiple sclerosis. Cannabis material may also have beneficial effects in patients who suffer from chronic pain, muscle spasms, insomnia, posttraumatic stress disorder, dizziness during chemotherapy and low appetite. Cannabis material for medical use can be in the form of capsules, tinctures or edibles.

However, the cultivation of cannabis for the manufacture of pharmaceuticals and medical products faces many obstacles. Often such products are of poor quality and the purity of the product required for medical use is not achieved. An urgent problem is fluctuating quality. For example, contamination with heavy metals, residual solvents, pesticides and fungicides or fluctuations of the cannabinoid content leads to products with low and inconsistent quality. Such products potentially constitute health risks to patients and consumers.

Therefore, an improved cannabis material for manufacturing of drug products is needed to ensure patient and consumer safety. Generally, methods of producing cannabis material should provide improved and consistent quality and high purity levels suitable for medical applications. The desired cannabis material should have strongly reduced contaminations of heavy metals, residual solvents, pesticides and fungicides. In particular, the cannabis material must have markedly reduced fluctuation in quality compared to products available today. Particularly, the desired cannabis material must have low fluctuations in concentrations of active ingredients so that the final product can be dosed safely. Of course, the production method of cannabis material should allow for cost efficient production of cannabis material suitable for medical use.

Traditionally, cannabis is grown outdoors. However, fluctuations in outside temperature, humidity, strength and length of sunlight during cultivation lead to quality variations of the cannabis material. Subsequently, variation in purity and cannabinoid content of the cannabis material may occur. Furthermore, cannabis is often cultivated in soil. However, quality and composition of the soil may vary which can lead to variations in the composition and concentration of active ingredients in the cannabis material.

Therefore, it is an object of the invention to overcome the problems of the prior art. Particularly, it is an object of the invention to provide a new method of producing cannabis material with improved quality and reduced contamination. It is also an object of the invention to provide a new method of producing cannabis material with reduced quality and content fluctuation. Furthermore, it is an object of the invention to provide a new method of producing cannabis material with increased growth rate of cannabis plants, higher yield of cannabis material and/or improved taste of the cannabis material.

### Summary of the invention

In an embodiment, the invention provides an indoor method for producing cannabis material, comprising:
a) growing a cannabis clone to obtain a grown cannabis plant (growth phase), comprising
   - exposing the cannabis clone to light within the wavelength range of from 350 nm to 800 nm,
   - exposing the cannabis clone to a growth medium comprising at least one vitamin,
b) subjecting the grown cannabis plant to a flowering phase to obtain a flowering cannabis plant, comprising
   - exposing the grown cannabis plant to light within the wavelength range of from 350 nm to 800 nm,
   - exposing the grown cannabis plant to a gas mixture having a volume ratio of CO₂/O₂ of at least 0.0025,
   - exposing the grown cannabis plant to a flowering medium comprising at least one vitamin.

In embodiments, the method further comprises subjecting a cannabis cutting to a propagation phase to obtain the cannabis clone. In other words, a cannabis cutting may be obtained to produce a cannabis clone to be used in the growth phase of this invention.

In embodiments, the method further comprises harvesting cannabis material from the flowering cannabis plant to obtain harvested cannabis material.

In embodiments, the method further comprises drying the harvested cannabis material to obtain dried cannabis material.

In embodiments, the method further comprises sterilization of the dried cannabis material.

In embodiments, the method further comprises extraction from the sterilized cannabis plant material to obtain a cannabis extract.

Preferably, the method includes growing a plurality of cannabis clones, and subjecting a plurality of grown cannabis plants to a flowering phase. Generally, the method of this invention is suitable to be applied to a plurality of clones/plants simultaneously.

In a preferred embodiment, the method comprises the growth phase, the flowering phase, the harvesting, the drying and the sterilization, and optionally the extraction. In a particularly preferred embodiment, the method comprises the propagation phase, the growth phase, the flowering phase, the harvesting, the drying and the sterilization, and optionally the extraction.

The inventors found that the method according to the invention allows for the production of cannabis material with increased yield and improved taste of the cannabis material. Furthermore, the inventors found that the cannabis material obtained by the method according to the invention has particular low levels in heavy metals and pathogens. Furthermore, the methods leads to particular reproducible cannabinoid and/or terpene profiles. Surprisingly, the cannabis material obtainable by this method has excellent product uniformity and reproducibility of the active ingredients.

### Definitions

"Cannabis plant" means a plant of the family *Cannabaceae.* The cannabis plant can be for example genetically modified plants or genetically unmodified plants. In this application "cannabis plant" may refer to the cultivated plant at any stage of cultivation from an optional propagation phase until harvesting. The cannabis plant may be chosen from *Cannabis sativa, Cannabis indica, Cannabis ruderalis and*/*or hybrids thereof.*

"Cannabis material" means a material derived from the cannabis plant. The material can be any part of the cannabis plant and can be from any developmental stage of the cannabis plant. For example, "cannabis material" includes harvested cannabis material, dried cannabis material, sterilized cannabis material and cannabis extract. Preferably, cannabis material comprises for example dried cannabis flower, cannabis extract, cannabis resin, cannabis oil or cannabis tincture.

"Cannabis plant source material" means a material capable of growing into a cannabis clone. The cannabis plant source is further capable of growing into a grown cannabis plant. The cannabis plant source is for example a cannabis plant embryo, cannabis meristem or cannabis meristematic cells, cannabis callus or cannabis callus cells, a cannabis seedling or a cannabis cutting. Preferably, the cannabis plant source is a cannabis seedling and/or a cannabis cutting.

"Cannabis clone" refers to a young cannabis plant developed out of the cannabis plant source. A cannabis clone for example has developed small roots, shoots and leaves. Typically, cannabis clones reach a height of not more than 15 cm. The cannabis clone can for example be the cannabis plant after an optional propagation phase and before the growth phase. "Propagation phase" means the time period, wherein the cannabis plant source is grown into a cannabis clone.

"Grown cannabis plant" refers to the cannabis plant after the growth phase and before completion of the flowering phase. The grown cannabis plant has developed into a plant of more than 15 cm. "Growth phase" means the time period, wherein the cannabis clone grows into the grown cannabis plant.

"Flowering cannabis plant" refers to the cannabis plant when the cannabis plant is for example growing buds or is blooming, e.g. during the end of the flowering phase. The term can refer to any developmental stage shortly before growing buds until harvesting of the flowers. "Flowering phase" means the time period subsequent to the growth phase until harvesting of the flowers. During the flowering phase, the cannabis plant can further grow and increase its size. The time point when the cannabis plant starts to grow flower buds can vary and can fall within the growth phase and/or flowering phase. Preferably, the time point when the cannabis plant starts to grow flower buds falls within the flowering phase.

"Harvested cannabis material" refers to the cannabis material that was harvested from the flowering cannabis plant for further processing and can refer to any part of the cannabis plant after cutting off. The harvested cannabis material may refer to the cannabis plant after cutting the main stem at its lower part. The harvested cannabis material can also refer to the flowers after cutting off the flowers from the stems. The harvested cannabis material can also refer to the flowers after trimming. "Trimming" means cutting off residual leaves and other plant material other than flowers from the harvested cannabis flowers to substantially separate the flowers from other parts of the plant.

"Dried cannabis material" refers to cannabis material after drying the harvested cannabis material. During drying, a substantial part of the moisture of the harvested cannabis material is removed. The dried cannabis material may refer to cut and dried cannabis flowers.

"Sterilized cannabis material" refers to the cannabis material after sterilizing and can for example be dried and sterilized cannabis material, such as dried and sterilized cannabis flowers.

"Cannabis extract" refers to cannabis material after the optional extraction. The cannabis extract can for example be a cannabis resin or a cannabis oil.

"Indoor" means an enclosed space having at least four walls and a ceiling wherein the temperature, the light, the humidity and/or the gas mixture can be controlled. "Indoor" can for example be inside a house, a greenhouse, a room, a hall, a chamber or an incubator. In preferred embodiments, the indoor space is large enough to allow for cultivating at least 1,000 cannabis plants, preferably at least 10,000 or at least 50,000 cannabis plants.

### Detailed description

The present invention relates to an indoor method for producing cannabis material suitable for medical use comprising at least a growth phase, a flowering phase, and harvesting of cannabis material. The method may further comprise a propagation phase before the growth phase. The method may further comprise drying harvested cannabis material, sterilization of dried cannabis material and optionally extraction from the dried cannabis material. It should be understood that the singular articles "a", "an" and "the" do not necessarily mean that the singular is intended. Instead, singular articles should be construed as meaning "at least one".

### Cannabis cultivation phases

In preferred embodiments, the method comprises a propagation phase wherein a cannabis plant clone is obtained from the cannabis plant source. A propagation phase may take place before the growth phase. Preferably, during the propagation phase cannabis plant source material is exposed to a propagation medium comprising at least one vitamin. "Propagation" means the process of growing a new plant clone from a plant source material. In preferred embodiments, the cannabis plant source is a cannabis seedling and/or a cannabis cutting. In particular preferred embodiments the cannabis plant source is a cannabis cutting. For example, a cannabis seedling is subjected to a propagation phase in which the seedling grows small roots, small stems and small leaves. "Stems" means the structural axes of the cannabis plant which hold the leafs, buds and/or the flowers. Stems do not comprise roots. The plant clone obtained from the cannabis seedling after the propagation phase is, for example, further grown into a cannabis plant during the growth phase. From the grown cannabis plant, cannabis cuttings can be obtained by cutting suitable parts of the grown plant, for example lateral shoots, main shoots or parts thereof. A grown cannabis plant can for example provide more than 20 cuttings. A grown cannabis plant that provides cannabis cuttings is referred to as "mother plant". For example, after being cut from a mother plant, the cannabis cuttings are subjected to the propagation phase, the growth phase, the flowering phase, the harvesting, the drying, and the sterilization to provide sterilized cannabis material, and are further optionally subjected to extraction to provide cannabis extract.

Preferably, the duration of the propagation phase is at least 2 days, at least 3 days, at least 4 days, at least 5 days, or at least 6 days. A longer propagation phase allows for the formation of more, longer and larger roots and provides for a healthier cannabis clone. Thereby the cannabis plant may absorb more nutrients for example during the growth phase and during the flowering phase. As a result, the cannabis plant will grow faster during the growth phase, grow more and larger flowers during the flowering phase and synthesize a larger amount of active ingredients. In embodiments, the propagation phase does not exceed a duration of 28 days, 21 days, or 14 days. It turned out that extending the propagation phase beyond that time would not significantly improve the yield of harvested and/or dried cannabis material. In a preferred embodiment, the duration of the propagation phase is from 2 to 28 days, or from 4 to 14 days.

Subsequent to the propagation phase, the cannabis clone may be subjected to the growth phase to obtain a grown cannabis plant. Preferably, the duration of the growth phase is at least 1 day, at least 2 days, at least 3 days, at least 4 days, at least 5 days, or at least 6 days. A longer growth phase allows for the formation of more, longer and larger roots. Thereby the cannabis plant may absorb more nutrients from the growth medium. A longer growth phase also allows for the formation of more and larger leaves. Thereby the cannabis plant can reach a higher photosynthesis rate. In embodiments, the growth phase will not exceed a duration of 28 days, of 25 days, of 21 days, of 18 days, of 14 days, of 12 days, of 10 days, or of 7 days. It turned out that extending the growth phase beyond that time would not significantly improve the yield of harvested material and/or dried cannabis material. A too long growth phase would lead to the formation of too many and too large leafs and stems thereby decreasing the growth of flowers. In a preferred embodiment, the duration of the growth phase is from 2 to 28 days, or from 4 to 14 days.

Subsequent to the growth phase, the grown cannabis plant may be subjected to the flowering phase to obtain a flowering cannabis plant. During the flowering phase the cannabis plant can still grow and increase its size. Preferably, the duration of the flowering phase is at least 10 days, at least 15 days, at least 20 days, at least 25 days, at least 30 days, at least 35 days, at least 40 days, or at least 45 days. A longer flowering phase increases the size and number of flowers per plant thereby increasing the yield of harvested cannabis material per plant. A higher number of flowering days also increases the amount and ratio of active ingredients. However, increasing the flowering phase beyond a certain time would not further increase the amount of active ingredients. Thus, it is preferred that the flowering phase ends before a duration of 100 days, 90 days, 80 days, 70 days, or 60 days. In a preferred embodiment, the duration of the flowering phase is of from 10 to 100 days, or from 25 to 60 days.

In a particular preferred embodiment, a cannabis plant source material is subjected to a propagation phase with a duration of 2 to 28 days to obtain a cannabis clone; subsequently the cannabis clone is subjected to a growth phase with a duration of 2 to 28 days to obtain a grown cannabis plant; and subsequently the grown cannabis plant is subjected to a flowering phase with a duration of 10 to 100 days to obtain a flowering cannabis plant. Preferably, the cannabis plant source material is a cannabis cutting.

During cannabis cultivation, the cannabis plant should produce large amounts of active ingredients. Active ingredients are mostly synthesized during the flowering phase. In the context of this invention, "cultivation" includes the growth phase and the flowering phases, and the optional propagation phase, if any. For the synthesis of many and large amounts of active ingredients, the number of stems per plant is preferably kept low. Preferably, the flowering cannabis plant has a weight ratio of the cumulative weight of leaves and flowers relative to stems of at least 1.5:1, at least 2:1, at least 3:1, at least 4:1, at least 5:1, at least 6:1, at least 7:1, or at least 8:1.

Preferably, the cannabis plant has a weight ratio of the cumulative weight of leaves and flowers relative to stems of at most 100:1, at most 90:1, at most 80:1, at most 70:1, at most 60:1, at most 50:1, or at most 40:1. In certain embodiments, the indicated weight ratio is from 1.5:1 to 50:1 after an optional propagation phase. The weight ratio may be from 5:1 to 80:1 after the growth phase. In an embodiment, the weight ratio is from 7:1 to 100:1 during the flowering phase. The weight ratio can be achieved by controlling the duration of propagation, growth and flowering phases as disclosed herein, and/or by applying the light and nutrition media regimes described herein. Preferably, the ratio of leaves and flowers to stems applies to the end of the propagation phase, the growth phase and/or the flowering phase, respectively. A higher ratio of leaves and flowers to stems decreases the amount of not usable stems. Thereby the plant uses less energy for growth and maintenance of stems and distributes more energy into the leaves and flowers. Thereby, the growth rate, the photosynthesis rate and the amount and size of flowers is increased. A high ratio of leaves and flowers to stems can be fostered by application of the "sea of green (SOG)" method.

### Lighting of the cannabis plant

Lighting influences the growth and flowering behavior of the cannabis plant. The cannabis plant is exposed to light to ensure an optimal photosynthesis rate. Preferably, the indoor method according to the present invention comprises an artificial light source. The light source should emit high energy as well as an optimized spectrum, thereby improving the photosynthesis rate of the cannabis plant. Preferably, the artificial light source comprises a plurality of LEDs. The plurality of LEDs provide for high energy emission and precise adjustment of the emitted spectrum. Preferably, the artificial light source comprises at least one reflector. For example, the reflector guides the light to the surface of the leaves of the cannabis plant and increases the leaf surface area exposed to the light, thereby improving the photosynthesis rate. Improving the photosynthesis rate contributes to achieving the intended high amounts of active ingredients and weight ratio of flowers and leaves relative to stems.

Preferably, the artificial light source comprises a housing and a heat sink. A housing and a heat sink allows for improved heat management. The housing preferably comprises aluminum. An aluminum housing improves cooling of the lamps and dissipation of the heat emitted by the artificial light source. The housing preferably comprises a plate for heat conduction with a thickness of at least 1 mm, at least 2 mm, at least 3 mm, or at least 3.5 mm. The thickness preferably is at most 200 mm, at most 100 mm, at most 70 mm, or at most 50 mm. The thickness improves the heat dissipation of the light source and improves the life span of the artificial light source. In a preferred embodiment, the thickness is of from 1 mm to 70 mm, or of from 2 mm to 50 mm. Preferably, the artificial light source comprises a ventilation and/or convection system.

For an optimized photosynthesis rate, it is important to ensure an optimized distance between the light source and the cannabis plant. The shortest distance between the artificial light source and a cannabis plant is preferably at most 2 m, at most 1 m, at most 80 cm, at most 60 cm, at most 40 cm, at most 20 cm, or at most 10 cm. However, if the light source is too close to the cannabis plant, bleaching of plant material may occur as well as the area of light produced by the artificial light source is decreased. Therefore, the shortest distance between the artificial light source and a cannabis plant is at least 1 cm, at least 2 cm, at least 3 cm, at least 4 cm, at least 5 cm, or at least 6 cm. In a preferred embodiment, the distance is of from 1 cm to 2 m, or of from 2 cm to 1 m, or of from 3 cm to 80 cm. The mentioned distance is the length between the point where the light exits the artificial light source, e.g. the lens or the last lens, if more lenses are used, and the closest part of the cannabis plant that is closest to said point.

It is important for an optimal photosynthesis rate that the artificial light emits enough energy. The artificial light source needs to emit light in the photosynthetically active range (PAR) of the light spectrum to ensure optimal photosynthesis. Photosynthetically active radiation (PAR) refers to the spectral range of light that enables photosynthetic organisms to undergo photosynthesis. PAR can be quantified by the photosynthetic photon flux density (PPFD) which expresses the number of PAR photons received by a surface for a specific time (µmol*m⁻²*s⁻¹). PAR can be measured according to ISO 23539:2005 using a spectroradiometer such as a MSC15 device (Gigahertz-Optik). According to the invention, PAR is in the range of 350-800 nm. PAR as mentioned above improves the photosynthesis rate and improves the flowering of the cannabis plant.

Preferably, the cannabis plant is exposed to light with a PPFD of at least 400 µmol*m⁻²*s⁻¹, at least 450 µmol*m⁻²*s⁻¹, at least 500 µmol*m⁻²*s⁻¹, at least 550 µmol*m⁻²*s⁻¹, at least 600, at least 650 µmol*m⁻²*s⁻¹, or at least 700 µmol*m⁻²*s⁻¹. Preferably, the cannabis plant is exposed to light with a PPFD of at most 10,000 µmol*m⁻²*s⁻¹, at most 9,000 µmol*m⁻²*s⁻¹, at most 8,000 µmol^{*}m⁻²*s⁻¹, at most 7,000 µmol*m⁻²*s⁻¹, at most 6,000 µmol*m⁻²*s⁻¹, at most 5,000 µmol*m⁻²*s⁻¹, at most 4,000 µmol*m⁻²*s⁻¹, at most 3,000 µmol*m⁻²*s⁻¹, or at most 2,000 µmol*m⁻²*s⁻¹. In a preferred embodiment, the cannabis plant is exposed to light with a PPFD of from 400 µmol*m⁻²*s⁻¹ to 10,000 µmol*m⁻²*s⁻¹, of from 450 µmol*m⁻²*s⁻¹ to 9,000 µmol*m⁻²*s⁻¹, or of from 500 µmol*m⁻²*s⁻¹ to 8,000 µmol*m⁻²*s⁻¹. A PPFD as mentioned above may be used during the propagation phase, the growth phase and/or the flowering phase. In preferred embodiments, the PPFD as mentioned above is used during the propagation phase, the growth phase and the flowering phase. In particular preferred embodiments, the cannabis plant is exposed to light with a PPFD of from 500 µmol*m⁻²*s⁻¹ to 3,000 µmol*m⁻²*s⁻¹ during the propagation phase; the cannabis plant is exposed to light with a PPFD of from 600 µmol^{*}m⁻²*s⁻¹ to 3,000 µmol*m⁻²*s⁻¹ during the growth phase; and the cannabis plant is exposed to light with a PPFD of from 700 µmol*m⁻²*s⁻¹ to 4,000 µmol*m⁻²*s⁻¹ during the flowering phase. The PPFD may be measured at the height of the topmost leaf of the cannabis plant. A higher PPFD increases the light reactions of the photosynthesis and thereby improves the photosynthesis rate of the cannabis plant. An improved photosynthesis rate increases the absorption of nutrients from the nutrient medium by the cannabis plant. A higher PPFD improves the growth rate and the synthesis rate of active ingredients. Furthermore, a higher PPFD increases the amount and size of flowers per cannabis plant, thereby improving the yield of cannabis material. If the PPFD is too high, the photosynthesis rate of the cannabis plant may decrease. A too high PPFD bleaches the leaves and/or other parts of the plant and may harm the cannabis plant.

The PPFD exposure of the cannabis plants during the flowering phase compared to the propagation phase may be higher by a factor of at least 1.1, at least 1.15, at least 1.2, at least 1.25, at least 1.3, at least 1.35, or at least 1.4. A higher PPFD exposure during flowering phase compared to the propagation phase improves the synthesis of active ingredients. If the PPFD exposure ratio during the flowering phase relative to the propagation phase is too high, flowering and the active ingredient profile will be impaired. Therefore, PPFD exposure may be at most 10 times as high during the flowering phase as compared to the propagation phase. Preferably, the PPFD exposure factor is at most 8, at most 7, at most 6, at most 5, at most 4, or at most 3. In a preferred embodiment, the PPFD exposure of the cannabis plant during the flowering phase compared to the propagation phase is higher by a factor of from 1.1 to 10, of from 1.15 to 8, or of from 1.2 to 7.

The PPFD exposure of the cannabis plants during the flowering phase compared to the growth phase may be higher by a factor of at least 1.1, at least 1.15, at least 1.2, at least 1.25, at least 1.3, at least 1.35, or at least 1.4. A higher PPFD exposure during the flowering phase compared to the growth phase improves the synthesis of active ingredients. If the PPFD exposure ratio during the flowering phase relative to the growth phase is too high, flowering and the active ingredient profile will be impaired. Therefore, PPFD exposure may be at most 10 times as high during the flowering phase as compared to the growth phase. Preferably, the PPFD exposure factor is at most 8, at most 7, at most 6, at most 5, at most 4, or at most 3. In a preferred embodiment, the PPFD exposure of the cannabis plant during the flowering phase compared to the growth phase is higher by a factor of from 1.1 to 10, of from 1.15 to 8, or of from 1.2 to 7.

The PPFD 30 cm below the light source during light exposure preferably is at least 10,000 µmol*m⁻²*s⁻¹, at least 8,000 µmol*m⁻²*s⁻¹, at least 7,000 µmol*m⁻²*s⁻¹, at least 6,000 µmol*m⁻²*s⁻¹, at least 5,000 µmol*m⁻²*s⁻¹, or at least 3,000 µmol*m⁻²*s⁻¹. The PPFD as mentioned before may be applied during light exposure within the propagation phase, the growth phase and/or the flowering phase. Thereby an improved photosynthesis rate can be achieved.

The duration of light exposure per day influences the growth, the onset und duration of flowering and the active ingredient profile of the cannabis plant and cannabis material. In embodiments, the cannabis plant is exposed to light for at least 6 h per day, at least 7 h per day, at least 8 h per day, at least 9 h per day, at least 10 h per day, at least 11 h per day, or at least 12 h per day. The duration of light exposure as mentioned may be applied during the propagation phase, the growth phase and/or the flowering phase. "Light exposure" means that the artificial light source is switched on. A longer light exposure improves the health of the cannabis plant as well as increases the photosynthesis rate and the growth rate. A longer light exposure increases the concentration and ratios of active ingredients. However, if the cannabis plant is exposed to light for a too long period, the photosynthesis rate will decrease, the vascularization of the plant decreases and the overall health and vigor of the cannabis plant will decrease. In embodiments, the cannabis plant is exposed to light for at most 22 h per day, at most 21 h per day, at most 20 h per day, or at most 19 h per day. In a preferred embodiment, the cannabis plant is exposed to light of from 6 h to 22 h per day, of from 7 h to 21 h per day, or of from 8 h to 20 h per day. In a particular preferred embodiment, the cannabis plant is exposed to light of from 15 h to 21 h per day during the propagation phase; the cannabis plant is exposed to light of from 10 h to 20 h per day during the growth phase; and the cannabis plant is exposed to light of from 8 h to 17 h per day during the flowering phase.

Light exposure during the propagation phase may be longer than during the flowering phase by a factor of at least 1.1, at least 1.15, at least 1.2, at least 1.25, at least 1.3, at least 1.35, or at least 1.4. A longer light exposure during the propagation phase than during the flowering phase improves faster growth of the cannabis plant source material. A shorter duration during the flowering phase compared to the propagation phase triggers flowering and increases the size and numbers of flowers per cannabis plant. If the lighting during the flowering phase compared to propagation phase is too long, the flowering will be impaired and the active ingredient content and profile will be impaired. Therefore, the light exposure during the propagation phase may be longer than during the flowering phase by a factor of at most 10, at most 8, at most 6, at most 5, at most 4, at most 3, or at most 2. In a preferred embodiment, light exposure during the propagation phase is longer than during the flowering phase by a factor of from 1.1 to 6, or 1.2 to 5, or 1.3 to 4. In an embodiment, light exposure during the growth phase may be longer than during the flowering phase by a factor of at least 1, at least 1.1, at least 1.15, at least 1.2, at least 1.25, at least 1.3, at least 1.35, or at least 1.4. A longer light exposure during the growth phase compared to the flowering phase improves faster growth of the cannabis plant source material. A shorter duration during the flowering phase compared to the growth phase triggers flowering and increases the size and numbers of flowers per cannabis plant. If the lighting during the flowering phase compared to growth phase is too long, the flowering will be impaired and the active ingredient content and profile will be impaired. Therefore, the light exposure during the growth phase may be longer than during the flowering phase by a factor of at most 10, at most 8, at most 6, at most 5, at most 4, at most 3, or at most 2. In a preferred embodiment, light exposure during the growth phase is longer than during the flowering phase by a factor of from 1.1 to 6, or 1.2 to 5, or 1.3 to 4. In an alternative embodiment, the light exposure during the growth phase is longer than during the flowering phase by a factor of at least 1.

The color temperature of a light source is the temperature of an ideal black-body radiator that radiates light of a color comparable to that of the light source. Higher color temperatures are for example "cool colors" (bluish), lower color temperatures are for example "warm colors" (yellowish). The correlated color temperature (CCT) describes the relative color temperature of a light source. The correlated color temperature according to ISO 3664:2009 can be measured for example by using an RGB color sensor known to the skilled person. Preferably, the cannabis plant is exposed to light with a correlated color temperature (CCT) of at least 2,000 K, at least 2,700 K, at least 2,900 K, at least 3,000 K, at least 3,200 K, at least 3,400 K, or at least 3,500 K. The cannabis plant is preferably exposed to light with a CCT of at most 20,000 K, at most 15,000 K, at most 12,000 K, at most 10,000 K, at most 9,000 K, at most 8,000 K, or at most 7,000 K. In a preferred embodiment, the cannabis plant is exposed to light with a CCT of from 2,000 K to 20,000 K, of from 2,700 K to 15,000 K, or of from 2,900 K to 12,000 K. The CCT as mentioned above preferably applies during the propagation phase, the growth phase and/or the flowering phase. In a particular preferred embodiment, the cannabis plant is exposed to light with a CCT of from 3,200 K to 10,000 K during the propagation phase, of from 3,000 K to 8,000 K during the growth phase and of from 2,000 K to 7,000 K during the flowering phase. A CCT as mentioned above improves the photosynthesis rate and the flowering of the cannabis plant. An improved photosynthesis rate increases the absorption of nutrients from the nutrient medium by the cannabis plant. Thereby, the growth rate is improved and the active ingredient content and ratio are improved.

The growth and the photosynthesis are influenced by the variation of the CCT. The variation is the difference between minimum CCT and maximum CCT of the lighting during light exposure within the respective cultivation phase. The mean CCT is the arithmetic mean of the CCT of the lighting under evaluation, e.g. the arithmetic mean of 10 equally distributed measurements. The variation of CCT from mean CCT of the light preferably is at most 10%, at most 8%, at most 6%, at most 4%, at most 3%, at most 2%, at most 1%, or at most 0.5%. The variation of the CCT as mentioned above preferably may apply during the propagation phase, the growth phase and/or the flowering phase. A lower variation improves the photosynthesis rate and the flowering of the cannabis plant. Lower variation reduces the variation in cannabinoid content. Thereby the reproducibility of the active ingredient content and ratio is increased. This ensures safety for the patient as well as consistent effect of the active ingredient when administering to a patient.

The mean CCT during light exposure in the flowering phase may be lower than during the propagation phase by a factor of at least 1.05, at least 1.1, at least 1.15, at least 1.2, at least 1.125, at least 1.3, at least 1.35, or at least 1.4. The CCT during the flowering phase may be lower than during the propagation phase by a factor of at most 10, at most 8, at most 7, at most 6, at most 5, at most 4, at most 3, or at most 2. In a preferred embodiment, the CCT during the flowering phase is lower than during the propagation phase by a factor of from 1.05 to 10, of from 1.1 to 8, or of from 1.15 to 7. In a particular preferred embodiment, the CCT during the flowering phase is lower than during the propagation phase by a factor of from 1.3 to 3. This CCT ratio between the flowering phase and the propagation phase improves the flowering and the active ingredient content and ratio of the cannabis plant.

The mean CCT during light exposure in the flowering phase may be lower than during the growth phase by a factor of at least 1.05, at least 1.1, at least 1.15, at least 1.2, at least 1.125, at least 1.3, at least 1.35, or at least 1.4. The CCT during the flowering phase may be lower than during the growth phase by a factor of at most 10, at most 8, at most 7, at most 6, at most 5, at most 4, at most 3, or at most 2. In a preferred embodiment, the CCT during the flowering phase is lower than during the growth phase by a factor of from 1.05 to 10, of from 1.1 to 8, or of from 1.15 to 7. In a particular preferred embodiment, the CCT during the flowering phase is lower than during the growth phase by a factor of from 1.3 to 7. This CCT ratio between the flowering phase and the growth phase improves the flowering and the active ingredient content and ratio of the cannabis plant.

The ratio of blue, red and green light, which the cannabis plant is exposed to, influences growth, health and flowering behavior. The ratio of red, blue and/or green light can for example be determined by measuring the intensity of red, blue and/or green light with a photometer known to the skilled person. The intensity of red light can be determined at 660 nm, the intensity of blue light can be determined at 450 nm and the intensity of green light can be determined at 540 nm.

In this disclosure, a light intensity may be measured at the topmost part of the highest cannabis plant within the irradiated area below the respective light source.

The ratio of red to green light preferably is at least 1.1:1, at least 1.2:1, at least 1.4:1, at least 1.6:1, at least 1.8:1, at least 2.0:1, at least 2.2:1, at least 2.4:1, at least 2.8:1, at least 3:1, at least 3.5:1, or at least 4:1. The ratio of red to green light preferably is at most 20:1, at most 10:1, at most 8:1, at most 7:1, at most 6:1, at most 5:1, at most 4:1, at most 3:1, or at most 2:1. In a preferred embodiment, the ratio of red to green light is of from 1.1:1 to 20:1, of from 1.2:1 to 10:1, or of from 1.4:1 to 8:1. The ratio preferably applies during the propagation phase and/or the growth phase and/or during the flowering phase. In a particular preferred embodiment, the ratio of red to green light is of from 1.1:1 to 8:1 during the growth phase; and the ratio of red to green light is of from 1.8:1 to 10:1 during the flowering phase. In a particularly preferred embodiment, the ratio of red to green light is of from 1.1:1 to 8:1 during the propagation phase; the ratio of red to green light is of from 1.2:1 to 10:1 during the growth phase; and the ratio of red to green light is of from 1.4:1 to 20:1 during the flowering phase. The ratio as mentioned above improves the health and vigor of the cannabis plant. The high ratio of red to green light increases the growth rate of the flowers thereby increasing the yield of harvested cannabis material.

The ratio of blue to green light preferably is at least 1.1:1, at least 1.2:1, at least 1.4:1, at least 1.6:1, at least 1.8:1, at least 2.0:1, at least 2.2:1, at least 2.4:1, at least 2.8:1, at least 3:1, at least 3.7:1, or at least 4.4:1. The ratio of blue to green light preferably is at most 20:1, at most 10:1, at most 8:1, at most 7:1, at most 6:1, or at most 5:1. In a preferred embodiment, the ratio of blue to green light is of from 1.1:1 to 20:1, of from 1.2:1 to 10:1, or of from 1.4:1 to 8:1. The ratio preferably applies during the propagation phase, the growth phase and/or during the flowering phase. In a particular preferred embodiment, the ratio of blue to green light is of from 2.0:1 to 10:1 during the growth phase and of from 1.1:1 to 5:1 during the flowering phase. In a particular preferred embodiment, the ratio of blue to green light is of from 1.4:1 to 7:1 during the propagation phase; the ratio of blue to green light is of from 2.0:1 to 10:1 during the growth phase; and the ratio of blue to green light is of from 1.1:1 to 5:1 during the flowering phase. The ratio as mentioned above improves the health and vigor of the cannabis plant. The higher ratio of blue to green light decreases contamination with pathogens like for example bacteria and fungi.

The ratio of red to blue light preferably is at least 0.1:1, at least 0.15:1, at least 0.2:1, at least 0.25:1, at least 0.3:1, at least 0.35:1, at least 0.40:1, at least 0.8:1, at least 1.2:1, at least 1.4:1, at least 1.6:1, at least 1.8:1, at least 2.1:1, or at least 2.4:1. The ratio of red to blue light preferably is at most 20:1, at most 10:1, at most 8:1, at most 7:1, at most 6:1, at most 5:1, at most 4:1, at most 3:1 or at most 2:1. In a preferred embodiment, the ratio of red to blue light is of from 0.1:1 to 10:1, of from 0.15:1 to 80:1, or of from 0.2:1 to 7:1. The ratio preferably applies during the propagation phase and/or the growth phase and/or during the flowering phase. In a particular preferred embodiment, the ratio of red to blue light is of from 0.1:1 to 3:1 during the growth phase and of from 1.4:1 to 5:1 during the flowering phase. In a particular preferred embodiment, the ratio of red to blue light is of from 0.15:1 to 7:1 during the propagation phase; and the ratio of red to blue light is of from 0.1:1 to 6:1 during the growth phase and of from 1.2:1 to 8:1 during the flowering phase. The lower ratio of red to blue light during the growth phase and/or propagation phase decreases contamination with pathogens like for example bacteria and fungi. The higher ratio of red to blue light during the flowering phase increases the size, health and vigor of the flowers and improves the synthesis of active ingredients.

Preferably, the ratio of red to green light during the flowering phase is higher than the ratio of red to green light during the growth phase. Preferably, the ratio of red to green light during the flowering phase is higher than during the growth phase by a factor of at least 1.1, more preferably at least 1.15, at least 1.2, at least 1.25, at least 1.3, at least 1.35, or at least 1.4. Preferably, the ratio of red to green light during the flowering phase is higher than during the growth phase by a factor of at most 20, at most 15, at most 10, at most 8, or at most 6, at most 4, or at most 3. In a preferred embodiment, the ratio of red to green light during the flowering phase is higher than the ratio of red to green light during the growth phase by a factor of from 1.1 to 15, of from 1.15 to 10, or of from 1.2 to 8. In a particular preferred embodiment, the ratio of red to green light during the flowering phase is higher than the ratio of red to green light during the growth phase by a factor of from 1.3 to 4. The ratio as mentioned above improves the health and vigor of the cannabis plant. The higher ratio of red to green light during the flowering phase increases the growth rate of the flowers thereby increasing the yield of harvested cannabis material.

Preferably, the ratio of red to green light during the flowering phase is higher than the ratio of red to green light during the propagation phase. Preferably, the ratio of red to green light during the flowering phase is higher than during the propagation phase by a factor of at least 1.1, more preferably at least 1.15, at least 1.2, at least 1.25, at least 1.3, at least 1.35, or at least 1.4. Preferably, the ratio of red to green light during the flowering phase is higher than during the propagation phase by a factor of at most 20, at most 15, at most 10, at most 8, at most 6, at most 4, or at most 3. In a preferred embodiment, the ratio of red to green light during the flowering phase is higher than the ratio of red to green light during the propagation phase by a factor of from 1.1 to 15, of from 1.15 to 10, or of from 1.2 to 8. In a particular preferred embodiment, the ratio of red to green light during the flowering phase is higher than the ratio of red to green light during the propagation phase by a factor of from 1.3 to 10. The ratio as mentioned above improves the health and vigor of the cannabis plant. The higher ratio of red to green light during the flowering phase increases the growth rate of the flowers thereby increasing the yield of harvested cannabis material.

Preferably, the ratio of blue to green light during the growth phase is higher than the ratio of blue to green light during the flowering phase. Preferably, the ratio of blue to green light during the growth phase is higher than during the flowering phase by a factor of at least 1.1, more preferably at least 1.15, at least 1.2, at least 1.25, at least 1.3, at least 1.35, or at least 1.4. Preferably, the ratio of red to green light during the flowering phase is higher than during the growth phase by a factor of at most 20, at most 15, at most 10, at most 8, at most 6, or at most 5. In a preferred embodiment, the ratio of blue to green light during the growth phase is higher than the ratio of blue to green light during the flowering phase by a factor of from 1.1 to 15, of from 1.15 to 10, of from 1.2 to 8. In a particular preferred embodiment, the ratio of blue to green light during the growth phase is higher than the ratio of blue to green light during the flowering phase by a factor of from 1.3 to 6. The ratio as mentioned has a good antimicrobial activity and thereby improves the health and vigor of the cannabis plant during the growth phase.

Preferably, the ratio of blue to green light during the propagation phase is higher than the ratio of blue to green light during the flowering phase. Preferably, the ratio of blue to green light during the propagation phase is higher than during the flowering phase by a factor of at least 1.1, more preferably at least 1.15, at least 1.2, at least 1.25, at least 1.3, at least 1.35, or at least 1.4. Preferably, the ratio of red to green light during the flowering phase is higher than during the propagation phase by a factor of at most 20, at most 15, at most 10, at most 8, at most 6, or at most 5. In a preferred embodiment, the ratio of blue to green light during the propagation phase is higher than the ratio of blue to green light during the flowering phase by a factor of from 1.1 to 15, of from 1.15 to 10, or of from 1.2 to 8. In a particular preferred embodiment, the ratio of blue to green light during the propagation phase is higher than the ratio of blue to green light during the flowering phase by a factor of from 1.25 to 6. The ratio as mentioned has a good antimicrobial activity and thereby improves the health and vigor of the cannabis plant during the propagation phase.

Preferably, the ratio of red to blue light during the flowering phase is higher than the ratio of red to blue light during the growth phase. Preferably, the ratio of red to blue light during the flowering phase is higher than during the growth phase by a factor of at least 1.2, at least 1.6, at least 1.8, at least 2.0, at least 2.5, at least 3.0, or at least 3.5 times higher. Preferably, the ratio of red to green light during the flowering phase is higher than during the growth phase by a factor of at most 40, at most 30, at most 20, at most 15, at most 12, at most 10, or at most 9. In a preferred embodiment, the ratio of red to blue light during the flowering phase is higher than the ratio of red to blue light during the growth phase by a factor of from 1.2 to 40, or of 1.6 to 30, or of 1.8 to 20. In a particular preferred embodiment, the ratio of red to blue light during the flowering phase is higher than the ratio of red to blue light during the growth phase by a factor of from 3 to 12.

The ratio as mentioned above improves the health and vigor of the flowers. The higher ratio of red to blue light during the flowering phase increases the growth rate of the flowers thereby increasing the yield of harvested cannabis material. In this disclosure, any reference to a light ratio means an intensity ratio. The intensities may be measured as indicated above.

Preferably, the ratio of red to blue light during the flowering phase is higher than the ratio of red to blue light during the propagation phase. Preferably, the ratio of red to blue light during the flowering phase is higher than during the propagation phase by a factor of at least 1.2, at least 1.6, at least 1.8, at least 2.0, at least 2.5, at least 3.0, or at least 3.5 times higher. Preferably, the ratio of red to green light during the flowering phase is higher than during the propagation phase by a factor of at most 40, at most 30, at most 20, at most 15, at most 12, at most 10, or at most 9. In a preferred embodiment, the ratio of red to blue light during the flowering phase is higher than the ratio of red to blue light during the propagation phase by a factor of from 1.2 to 40, or of 1.6 to 30, of 1.8 to 20. In a particular preferred embodiment, the ratio of red to blue light during the flowering phase is higher than the ratio of red to blue light during the propagation phase by a factor of from 3 to 12. The ratio as mentioned above improves the health and vigor of the flowers. The higher ratio of red to blue light during the flowering phase increases the growth rate of the flowers thereby increasing the yield of harvested cannabis material.

In a particular preferred embodiment, the cannabis plant source is exposed to light with a PPFD of from 500 µmol*m⁻²*s⁻¹ to 3,000 µmol*m⁻²*s⁻¹ for of from 15 h to 21 h per day during the propagation phase; subsequently the cannabis clone is exposed to light with a PPFD of from 600 µmol*m⁻²*s⁻¹ to 3,000 µmol*m⁻²*s⁻¹, a CCT of from 3,400 K to 8,000 K, a ratio of red to green light of from 1.3:1 to 3:1 and a ratio of blue to green light of from 2.0:1 to 10:1 for of from 10 h to 20 h per day during the growth phase; and the grown cannabis plant is exposed to light with a PPFD of from 700 µmol*m⁻²*s⁻¹ to 4,000 µmol*m⁻²*s⁻¹, a CCT of from 2,000 K to 7,000 K, a ratio of red to green light of from 1.8:1 to 6:1 and a ratio of blue to green light of from 1.1:1 to 6:1 for of from 8 h to 17 h per day during the flowering phase.

In a particularly preferred embodiment, light exposure during the propagation phase is longer than during the flowering phase by a factor of from 1.1 to 2; the PPFD exposure of the cannabis plant during the flowering phase compared to the growth phase is higher by a factor of from 1.1 to 10; the CCT during the flowering phase is lower than during the growth phase by a factor of from 1.3 to 3; the ratio of red to green light during the flowering phase is higher than the ratio of red to green light during the growth phase by a factor of from 1.3 to 4; the ratio of red to blue light during the flowering phase is higher than the ratio of red to blue light during the growth phase by a factor of from 3 to 12; and the ratio of blue to green light during the growth phase is higher than the ratio of blue to green light during the flowering phase by a factor of from 1.3 to 5.

If the light exposure is controlled as detailed above, significant improvement can be achieved. For example, during the propagation phase, the cannabis plant source material will faster grow into a healthy and vigorous cannabis clone optimally prepared for the growth phase. During the growth phase, the photosynthesis rate is improved and the cannabis clone grows faster into a grown cannabis plant with optimal health and vigor for the flowering phase. During the flowering phase, the onset of flowering is triggered faster and the flowers will grow faster and larger. Furthermore, the active ingredient content in the flowers will be higher and the ratios of the ingredients are more suitable for the use in medical applications.

### Indoor room

Preferably, the method for producing a cannabis plant is practiced in an indoor room. Preferably, the room comprises a heating, ventilation, and air conditioning (HVAC) system. The room preferably is a cleanroom. A cleanroom means that the gas mixture (atmosphere) inside the room is controlled to contain a low concentration of particles. The cleanroom can be set up by methods known to the skilled person. To meet the criteria of the cleanroom, for example Efficient Particulate Air (EPA) filters of grade E10, E11 or E12 or High Efficiency Particulate Air (HEPA) filters of grade H13 or H14 according to DIN EN 1822-1:2017 can be applied. The amount of particles can be measured using a cleanroom particle counter such as the Setra Systems 8000 Series Handheld Particle Counter. The cleanroom may comprise not more than 1 million particles with a particle size of larger than 5 µm per m³ gas mixture, not more than 500,000 particles, not more than 200,000 particles, not more than 100,000 particles, not more than 80,000 particles, not more than 70,000 particles, not more than 60,000 particles, or not more than 50,000 particles. The cleanroom may comprise not more than 20 million particles with a particle size of larger than 1 µm per m³ gas mixture, not more than 12 million particles, not more than 9 million particles, not more than 7 million particles, not more than 5 million particles, not more than 3 million particles, not more than 2 million particles, or not more than 1 million particles. The cleanroom may comprise not more than 100 million particles with a particle size of larger than 0.5 µm per m³ gas mixture, not more than 50 million particles, not more than 30 million particles, not more than 20 million particles, not more than 10 million particles, not more than 8 million particles, not more than 6 million particles, or not more than 4 million particles. The cleanroom may meet the criteria of ISO12644-1:2009 for cleanrooms. The cleanroom may be characterized by a particle amount equivalent to at least an ISO 9 cleanroom, or at least an ISO 8 cleanroom. "At least" means in this context that the room meets the criteria of the ISO class and/or a lower ISO class, meaning a higher degree of cleanness.

Preferably, the propagation phase, the growth phase and/or the flowering phase is performed in the cleanroom described herein. Preferably, the harvesting, the drying, the sterilization and/or the extraction is performed in the cleanroom described herein. In a preferred embodiments, the propagation phase, the growth phase, the flowering phase, the harvesting and the drying are performed in a cleanroom as described herein. In a particular preferred embodiment, the growth phase, the flowering phase and the harvesting are performed in a cleanroom characterized by a particle amount equivalent to at least an ISO 8 cleanroom. In a more particular preferred embodiment, the propagation phase, the flowering phase, the harvesting and the drying are performed in a cleanroom characterized by a particle amount equivalent to at least an ISO 8 cleanroom. In a more particular preferred embodiment, the propagation phase, the flowering phase, the harvesting, the drying, the sterilization and the optional extraction are performed in a cleanroom characterized by a particle amount equivalent to at least an ISO 8 cleanroom.

If the room as mentioned above is used during the propagation phase, the growth phase and/or the flowering phase, the contamination of the cannabis plant with fungi and/or bacteria or other pathogens is strongly reduced. For example, the amount of large hyphal fragments and multicellular spores, the amount of unicellular spores as well as fragments of airborne fungal material is reduced. Furthermore, contact with insects and parasites is avoided. Also, the amount of spores and prokaryotic cells is reduced. As a result, fewer plants become ill. The cannabis plants are healthier and provide a higher yield of flowers and cannabis material, a higher content of active ingredients and an improved ratio of active ingredients. In particular, the indoor room ensures a consistent and reproducible quality, purity and active ingredient content and ratio. The use of pesticides such as for example herbicides, insecticides, fungicides and antimicrobial disinfectants can be reduced or even abolished. Preferably, the cannabis plant is not exposed to pesticides. Thereby the cannabis plant is healthier and the cannabis product has a better quality and is not contaminated with pesticides. If the indoor room is used for the harvesting, the drying, the sterilization and/or the extraction, the contamination of the cannabis material with fungi and/or bacteria or other pathogens is strongly reduced. Furthermore, the cannabis material will have a higher content of active ingredients and an improved ratio of active ingredients. An increased purity, quality and consistent active ingredient content and ratio is achieved.

### Nutrient Medium

The term "nutrient medium" refers to a medium that contains ingredients necessary for the cannabis plants to grow and produce cannabis material. Exemplary nutrient media are growth medium, flowering medium and propagation medium. Reference to "nutrient medium" relates to growth medium, flowering medium and/or propagation medium. Preferably, the propagation medium is applied during the propagation phase. Preferably, the growth medium as applied during the growth phase. Preferably, the flowering medium is applied during the flowering phase. The application and the composition of the nutrient medium influences the growth, flowering and active ingredient profile. The skilled person knows several nutrient medium supply systems for plants. Preferably, the cannabis plant has no soil contact. Soil can comprise impurities like heavy metals or pathogens and negatively affect the quality of the cannabis material. In order to deliver nutrients to the cannabis plant without soil, systems known to the skilled person such as hydroponic systems and/or aeroponic systems can be applied. For example, nutrient medium may be sprayed to the roots of the cannabis plant. Hydroponics and/or aeroponics allow the control of the nutrient substances and concentrations thereof. Preferably, the nutrient delivery is automated.

Preferably, the nutrient medium comprises urea or a derivative thereof. The nutrient medium may comprise urea or a derivative thereof in an amount of at least 0.001 weight-%, at least 0.005 weight-%, at least 0.006 weight-%, at least 0.007 weight-%, at least 0.008 weight-%, at least 0.009 weight-%, at least 0.01 weight-%, or at least 0.011 weight-%, or at least 0.09 weight-%, or at least 0.12 weight-%, or at least 0.3 weight-%. Urea or a derivative thereof can improve the absorption of nitrates and other nutrients. However, if the amount of urea or a derivative thereof is too high, growth of the plant will be affected. Therefore, the nutrient medium preferably comprises urea or a derivative thereof in an amount of at most 10 weight-%, at most 9 weight-%, at most 8 weight-%, at most 7 weight-%, at most 6 weight-%, or at most 5 weight-%, or at most 4 weight-%, or at most 3 weight-%. In a preferred embodiment, the nutrient medium comprise urea in an amount of form 0.001 weight-% to 10 weight-%, of from 0.005 weight-% to weight-%, or of from 0.007 weight-% to 8 weight-%. In a particular preferred embodiment, the medium comprises urea in an amount of at least 0.011 weight-%.

Preferably, the nutrient medium comprises at least one chelating agent. The nutrient medium may comprise at least one chelating agent in an amount of at least 0.001 weight-%, at least 0.002 weight-%, at least 0.003 weight-%, at least 0.004 weight-%, at least 0.005 weight-%, at least 0.006 weight-%, or at least 0.007 weight-%, or at least 0.05 weight-%, or at least 0.1 weight-%, or at least 0.3 weight-%. The at least one chelating agent chelates primary nutrients, secondary nutrients and/or micronutrients and can improve the absorption thereof. However, if the amount of the at least one chelating agent is too high, growth of the cannabis plant will be impaired. Therefore, the nutrient medium preferably comprises at least one chelating agent in an amount of at most 25 weight-%, at most 20 weight-%, at most 15 weight-%, at most 12 weight-%, at most 10 weight-%, or at most 8 weight-%, or at most 6 weight-%, or at most 4 weight-% . A suitable chelating agent are for example ethylenediaminetetraacetic acid (EDTA), iminodisuccinic acid, polyaspartic acid (IDS), ethylenediamine disuccinic acid (EDDS), methyl-glycinediacetic acid (MGDA), L-glutamic acid diacetic acid tetrasodium salt (GLDA) and combinations thereof. Preferably, the chelating agent is EDTA. In a preferred embodiment, the nutrient medium comprises at least one chelating agent in an amount of from 0.001 weight-% to 25 weight-%, or of from 0.002 weight-% to 20 weight-%, or of from 0.003 weight-% to 15 weight-%. In a particular preferred embodiment, the medium comprises at least one chelating agent in an amount of at least 0.007 weight-%.

Preferably, the nutrient medium comprises at least one preservative. The nutrient medium may comprise the at least one preservative in an amount of at least 0.001 weight-%, at least 0.002 weight-%, at least 0.003 weight-%, at least 0.004 weight-%, at least 0.005 weight-%, or at least 0.006 weight-%, or at least 0.014 weight-%, or at least 0.12 weight-%. The preservative can help to prevent contamination with pathogens. A too high amount of the at least one preservative affects the growth of the cannabis plant. Therefore, the nutrient medium may comprise the preservative in an amount of at most 15 weight-%, at most 12 weight-%, at most 10 weight-%, at most 9 weight-%, at most 8 weight-%, or at most 7 weight-%, or at most 6 weight-%, or at most 5 weight-%, or at most 4 weight-%. Suitable preservatives are for example sodium sorbate, potassium sorbate, calcium sorbate and combinations thereof. Preferably, the preservative is potassium sorbate. In a preferred embodiment, the nutrient medium comprises the at least one preservative in an amount of from 0.001 weight-% to 15 weight-%, or of from 0.002 weight-% to 12 weight-%, or of from 0.003 weight-% to 10 weight-%. In a particular preferred embodiment, the nutrient medium comprises the at least one preservative in an amount of at least 0.006 weight-%. A suitable sorbate is for example potassium sorbate or calcium sorbate.

Preferably, the nutrient medium comprises a carrier agent. The nutrient medium may comprise at least one carrier agent in an amount of at least 0.001 weight-%, at least 0.002 weight-%, at least 0.003 weight-%, at least 0.004 weight-%, at least 0.005 weight-%, or at least 0.006 weight-%, or 0.009 weight-%, or 0.045 weight-%, or 0.13 weight-%. The at least one carrier agent can improve the absorption of primary nutrients, secondary nutrients and/or micronutrients. However, if the amount of the at least one carrier agent is too high, growth of the cannabis plant will be impaired. Therefore, the nutrient medium may comprise the at least one carrier agent in an amount of at most 12 weight-%, at most 11 weight-%, at most 10 weight-%, at most 9 weight-%, at most 8 weight-%, or at most 7 weight-%, or at most 6 weight-%, or at most 5 weight-%. Suitable carrier agents are for example propylene glycol, triethyl citrate, polyvinylpolypyrrolidon, poly-vinylpyrrolidon, maltit, silicate, sulfate, carbonate and combinations thereof. Preferably, the carrier agent is propylene glycol. In a preferred embodiment, the nutrient medium comprises the carrier agent in an amount of from 0.001 weight-% to 12 weight-%, or of from 0.002 weight-% to 11 weight-%, or of from 0.003 weight-% to 10 weight-%. In a particular preferred embodiment, the nutrient medium comprises the carrier agent in an amount of at least 0.045 weight-%.

In a preferred embodiment, the nutrient medium comprises the following components:

| **Component** | **Content (weight-%)** |
|---|---|
| Urea or derivative thereof | 0.001-10 |
| Chelating agent | 0.001-20 |
| Preservative | 0.001-15 |
| Carrier agent | 0.001-12 |

For example, the chelating agent is EDTA, the preservative is potassium sorbate and the carrier agent is propylene glycol.

Primary nutrients are minerals and substances which the cannabis plant needs in larger amounts for example for growth. Preferably, the nutrient medium comprises one or more primary nutrients. The nutrient medium may comprise one or more primary nutrients in sum of at least 0.005, weight-%at least 0.01 weight-%, at least 0.03 weight-%, at least 0.05 weight-%, at least 0.06 weight-%, at least 0.07 weight-%, at least 0.08 weight-%, at least 0.9 weight-%, at least 0.1 weight-%, at least 0.2 weight-%, at least 0.3 weight-%. A higher amount of primary nutrients increases the rate of photosynthesis as well as increase the growth rate of the cannabis plant. A too high amount of primary nutrients negatively affects the growth of the cannabis plant. Therefore, the nutrient medium may comprise primary nutrients in sum of at most 10 weight-%, at most 8 weight-%, at most 6 weight-%, at most 5 weight-%, at most 4 weight-%, at most 3 weight-%, at most 2 weight-%, at most 1 weight-% or at most 0.9 weight-%. In a preferred embodiment, the nutrient medium comprises one or more primary nutrient in sum of from 0.01 weight-% to 10 weight-%, or of from 0.03 weight-% to 8 weight-%, or of from 0,05 weight-% to 0.6 weight-%. Primary nutrients may be selected from the group consisting of a nitrogen source, a phosphor source, a potassium source and combinations thereof. In a preferred embodiment, the nutrient medium comprises a nitrogen source, a phosphorus source and a potassium source. In a particular preferred embodiment, the nutrient medium comprises a nitrogen source, a phosphorus source and a potassium source in sum of from 0.03 weight-% to 8 weight-%.

Preferably, the variation of primary nutrients in the nutrient medium is at most 8%, at most 6%, at most 4%, at most 3%, at most 2%, at most 1%, at most 0.7%, or at most 0.5%. A too high variation in primary nutrients such as the nitrogen source, the potassium source and/or the phosphorus source impairs the growth rate of the cannabis plant.

Preferably, the nutrient medium comprises at least one nitrogen source. The nutrient medium may comprise at least one nitrogen source in an amount of at least 0.005 weight-%, at least 0.01 weight-%, at least 0.03 weight-%, at least 0.06 weight-%, at least 0.08 weight-%, at least 0.9 weight-%, at least 0.1 weight-%, at least 0.2 weight-%, at least 0.3 weight-%. Preferably, the nitrogen source is selected from the group consisting of nitrate, ammonium, urea and combinations thereof. Suitable nitrates are for example calcium nitrate, potassium nitrate, ammonium nitrate and combinations thereof. A higher concentration of the at least one nitrogen source increases the growth rate of the cannabis plant. It also increases the amount of flowers. Surprisingly, the a higher concentration also increases the amount active ingredients. A too high amount of the at least one nitrogen source affects the growth of the cannabis plant. Therefore, the nutrient medium may comprise the at least one nitrogen source in an amount of at most 8 weight-%, at most 6 weight-%, at most 5 weight-%, at most 4 weight-%, at most 3 weight-%, at most 2 weight-%, at most 1 weight-% or at most 0.9 weight-%. In a preferred embodiment, the nutrient medium comprises at least one nitrogen source in an amount of from 0.005 weight-% to 8 weight-%, of from 0.01 weight-% to 6 weight-%, or of from 0.03 weight-% to 5 weight-%. In a particular embodiment, the nutrient medium comprises at least one nitrogen source in an amount of from 0.06 weight-% to 5 weight-%. In a preferred embodiment, the nutrient medium comprises at least two nitrogen sources. In a more preferred embodiment, the nutrient medium comprises at least three nitrogen sources. Preferably, the amount of the sum of the nitrogen sources is of from 0.005 weight-% to 8 weight-%, of from 0.01 weight-% to 6 weight-%, or of from 0.03 weight-% to 5 weight-%. In a particular preferred embodiment, the nutrient medium comprises at least two nitrogen sources, wherein the sum of the amount of the nitrogen sources is of from 0.01 weight-% to 8 weight-%.

Preferably, the nutrient medium comprises at least one phosphorus source. The nutrient medium may comprise at least one phosphorus source in an amount of at least 0.005 weight-%, of at least 0.01 weight-%, at least 0.02 weight-%, at least 0.03 weight-%, at least 0.04 weight-%, at least 0.06 weight-%, at least 0.08 weight-%, at least 0.1 weight-% or at least 0.15 weight-%. For example, the phosphorus source is P₂O₅, a phosphate or combinations thereof. Suitable phosphates are for example sodium dihydrogen phosphate, potassium dihydrogen phosphate or combinations thereof. In a particular preferred embodiment, the phosphorus source is P₂O₅. The at least one phosphorus source increases the growth rate of the cannabis plant. It also increases the amount of flowers per plant and increases the amount of active ingredients. A too high amount of the at least one phosphorus source affects the growth of the cannabis plant. Therefore, the nutrient medium may comprise the at least one phosphorus source in an amount of at most 8 weight-%, at most 6 weight-%, at most 5 weight-%, at most 4 weight-%, at most 3 weight-%, at most 2 weight-%, at most 1 weight-% or at most 0.9 weight-%. In a preferred embodiment, the nutrient medium comprises the at least one phosphorus source in an amount of from 0.005 weight-% to 8 weight-%, of from 0.01 weight-% to 6 weight-%, or of from 0.03 weight-% to 5 weight-%. In a particular preferred embodiment, the nutrient medium comprises at least one phosphorus source in an amount of from 0.01 weight-% to 4 weight-%.

Preferably, the nutrient medium comprises at least one potassium source. The nutrient medium may comprise at least one potassium source in an amount of at least 0.005 weight-%, of at least 0.01 weight-%, at least 0.02 weight-%, at least 0.03 weight-%, at least 0.04 weight-%, at least 0.06 weight-%, at least 0.08 weight-%, at least 0.1 weight-% or at least 0.15 weight-%. A suitable potassium source is for example K₂O, KH₂PO₄, KNO₃, or combinations thereof. Preferably, the potassium source is K₂O. Higher concentration of the at least one potassium source increases the growth rate of the cannabis plant. A too high amount of the at least one potassium source impairs growth of the cannabis plant. Therefore, the nutrient medium may comprise the at least one potassium source in an amount of at most 8 weight-%, at most 6 weight-%, at most 5 weight-%, at most 4 weight-%, at most 3 weight-%, at most 2 weight-%, at most 1 weight-% or at most 0.9 weight-%. In a preferred embodiment, the nutrient medium comprises at least one potassium source in an amount of from 0.005 weight-% to 8 weight-%, of from 0.01 weight-% to 6 weight-%, or of from 0.03 weight-% to 5 weight-%. In a particular preferred embodiment, the nutrient medium comprises at least one potassium source in an amount of from 0.01 weight-% to 4 weight-%.

In a preferred embodiment, the nutrient medium comprises the following components:

| **Component** | **Content (weight-%)** |
|---|---|
| Nitrogen source | 0.05-8 |
| Phosphorus source | 0.05-8 |
| Potassium source | 0.05-8 |

For example, the nitrogen source comprises nitrate, urea and ammonium, the phosphorus source is P₂O₅ and the potassium source is K₂O.

Secondary nutrients are minerals and substances that the cannabis plant needs in moderate amounts for example for growth. Preferably, the nutrient medium comprises one or more secondary nutrients. The nutrient medium may comprise one or more secondary nutrients in sum of at least 0.001 weight-%, at least 0.002 weight-%, at least 0.003 weight-%, at least 0.004 weight-%, at least 0.005 weight-%, or at least 0.009 weight-%. A higher amount of secondary nutrients improves the photosynthesis rate and the growth of the cannabis plant. A too high amount of secondary nutrients impairs the growth of the cannabis plant. Therefore, the nutrient medium may comprise secondary nutrients in sum of at most 10 weight-%, at most 5 weight-%, at most 3 weight-%, at most 2 weight-%, at most 1 weight-%, at most 0.9 weight-%, at most 0.8 weight-%, or at most 0.5 weight-%. The secondary nutrients may be selected from the group consisting of calcium, magnesium, sulfate, chloride and combinations thereof. In a preferred embodiment, the nutrient medium comprises one or more secondary nutrients in sum of from 0.001 weight-% to 10 weight-%, of from 0.002 weight-% to 5 weight-%, or of from 0.003 weight-% to 3 weight-%.

In a particular preferred embodiment, the nutrient medium comprises calcium and magnesium in sum of from 0.003 weight-% to 5 weight-%, or of from 0.004 weight-% to 3 weight-%, or of from 0.005 weight-% to 2 weight-%.

Preferably, the nutrient medium comprises a higher weight concentration of magnesium than calcium. A higher weight concentration of magnesium increases the synthesis of chlorophyll molecules, thus increasing the photosynthesis rate of the cannabis plant.

Micronutrients are nutrients and substances that the cannabis plant needs in low amounts such as for example trace elements. Preferably, the nutrient medium comprises one or more micronutrients. The nutrient medium may comprise one or more micronutrients in the sum of at least 0.001 weight-%, at least 0.002 weight-%, at least 0.004 weight-%, at least 0.006 weight-%, at least 0.008 weight-%, or at least 0.009 weight-%. A higher amount of micronutrients increases the enzyme activity of enzymes relating to photosynthesis and active ingredient anabolism. Thereby, the growth and the active ingredient content are increased. A too high amount of micronutrients leads to an impairment of the growth and health of the cannabis plant. Therefore, the nutrient medium may comprise micronutrients in sum of at most 6 weight-%, at most 4 weight-%, at most 3 weight-%, at most 2 weight-%, at most 1 weight-%, or at most 0.1 weight-%. The micronutrients may be selected from the group consisting of cobalt, sulfate, iron, iodine, manganese, molybdenum, zinc, boron, copper and combinations thereof. Preferably, the micronutrients are selected from the group consisting of iron, boron, manganese, zinc, copper and molybdenum and combinations thereof. In a preferred embodiment, the nutrient medium comprises one or more micronutrients in the sum of from 0.0001 weight-% to 6 weight-%, or of from 0.0002 weight-% to 4 weight-%, or of from 0.0004 weight-% to 3 weight-%. In a particular preferred embodiment, the nutrient medium comprises iron, boron, manganese, zinc, copper and molybdenum in sum of from 0.0008 weight-% to 3 weight-%, or of from 0.001 weight-% to 2 weight-%.

In a preferred embodiment, the nutrient medium comprises the following components:

| **Component** | **Content (weight-%)** |
|---|---|
| Primary nutrients | 0.005-10 |
| Secondary nutrients | 0.001-10 |
| Micronutrients | 0.001-4 |

In a particular preferred embodiment, the primary nutrients are selected from the group consisting of nitrogen source, phosphorus source, potassium source and combinations thereof; the secondary nutrients are selected from the group consisting of calcium, magnesium, sulfate, chloride and combinations thereof; and the micronutrients are selected from the group consisting of cobalt, sulfate, iron, iodide, manganese, molybdenum, zinc, boron, copper and combinations thereof.

Preferably, the nutrient medium comprises carbohydrates. The nutrient medium may comprise one or more carbohydrates in sum in an amount of at least 0.1 weight-%, at least 0.5 weight-%, at least 1 weight-%, at least 1.5 weight-%, at least 2 weight-%, or at least 2.5 weight-%. The carbohydrates can be sugars with various lengths of monomers such as monosaccharides, disaccharides, oligosaccharides or polymeric saccharides. For example, carbohydrates can be glucose, sucrose, saccharose, fructose, melitose, or alginic acid. In a particular preferred embodiment, the carbohydrate is sucrose or glucose. A higher concentration of carbohydrates increases the growth rate of the cannabis plant. A too high amount of carbohydrate sources increases the osmotic pressure of the nutrient medium and negatively influences the growth of the cannabis plant. Therefore, the nutrient medium may comprise carbohydrates in an amount of at most 30 weight-%, at most 20 weight-%, at most 10 weight-%, at most 9 weight-%, at most 8 weight-%, or at most 7 weight-%. In a preferred embodiment, the nutrient medium comprises carbohydrates in an amount of from 1 weight-% to 10 weight-%, of from 1.5 weight-% to 9 weight-%, or of from 2 weight-% to 8 weight-%.

Preferably, the nutrient medium comprises amino acids. The nutrient medium may comprise one or more amino acids in sum in an amount of at least 0.001 weight-%, 0.008 weight-%, at least 0.001 weight-%, at least 0.002 weight-%, at least 0.03 weight-%, at least 0.1 weight-%, or at least 0.5 weight-%. A higher concentration of amino acids increase growth of the cannabis plant and increases the number of flowers per plant. A too high amount of amino acids negatively affects the growth of the cannabis plant. Therefore, the nutrient medium may comprise amino acids in an amount of at most 35 weight-%, at most 30 weight-%, at most 20 weight-%, at most 10 weight-%, at most 9 weight-%, at most 8 weight-%, at most 7 weight-% or at most 6 weight-%. Amino acids can for example be proteinogenic amino acids or modified amino acids.

Preferably, the amino acids are L-amino acids. In a preferred embodiment, the nutrient medium comprises L-amino acids in an amount of from 0.01 weight-% to 20 weight-%, of from 0.02 weight-% to 10 weight-%, or of from 0.03 weight-% to 9 weight-%.

The nutrient medium may comprise glycine. Preferably, the nutrient medium comprises glycine in an amount of at least 0.001 weight-%, at least 0.008 weight-%, at least 0.01 weight-%, or at least 0.02 weight-%. Glycine is needed not only for purine synthesis and thus improves cell division and thereby plant growth, but is also incorporated into chlorophyll. Thereby the cannabis plant can synthesize more chlorophyll molecules thus increasing the photosynthesis rate.

Preferably, the nutrient medium comprises glycine, histidine, tyrosine and combinations thereof. In a preferred embodiment, the nutrient medium comprises glycine, histidine and tyrosine in an amount in sum of at least 0.001 weight-%, or at least 0.008 weight-%.

Preferably, the nutrient medium comprises at least one vitamin. The nutrient medium may comprise one or more vitamins in sum in an amount of at least 0.001 weight-%, at least 0.005 weight-%, at least 0.008 weight-%, at least 0.01 weight-%, at least 0.02 weight-%, at least 0.03 weight-%. A higher vitamin concentration increases the growth rate and increases the amount of flowers per plant. A higher vitamin concentration increases the activity of enzymes within the anabolic pathways for active ingredients, thereby increasing the concentration of active ingredients in the harvested cannabis material. A too high amount of vitamins negatively affects the growth of the cannabis plant. Therefore, the nutrient medium may comprise vitamins in sum in an amount of at most 15 weight-%, at most 12 weight-%, at most 10 weight-%, at most 9 weight-%, at most 7 weight-% or at most 5 weight-%. The nutrient medium may comprise vitamins selected from the group consisting of vitamin A, vitamin B1, vitamin B2, vitamin B3, vitamin B5, vitamin B6, vitamin B7, vitamin B9, vitamin B12, vitamin C, vitamin D, vitamin E, vitamin K and combinations thereof. In a preferred embodiment, the nutrient medium comprises one or more vitamins in sum in an amount of from 0.001 weight-% to 9 weight-%, or of from 0.005 weight-% to 7 weight-%. In a preferred embodiment, the nutrient medium comprises vitamin B1 and vitamin B2 in sum of at least 0.003 weight-%, of at least 0.005 weight-%, or at least 0.008 weight-%. Vitamin B2 is a precursor for FAD, which is a cofactor important for several enzymes in the anabolic pathway for several cannabinoids like THC and CBD. Thereby, external supplement of vitamin B2 can improve cannabinoid synthesis.

The nutrient medium may comprise at least one vitamin derivative. A vitamin derivative can be any derivative of a vitamin and is for example myo-inositol, para-aminobenzoic acid or retinoids. The nutrient medium may comprise at least one vitamin derivative in an amount of at least 0.001 weight-%, at least 0.005 weight-%, at least of at least 0.008 weight-%, at least 0.01 weight-%, at least 0.02 weight-%, at least 0.03 weight-%, or at least 0.05 weight-%. A higher vitamin derivative concentration increases the growth of the cannabis plant. The nutrient medium may comprise at least one vitamin derivative in an amount of at most 15 weight-%, at most 12 weight-%, at most 10 weight-%, at most 9 weight-%, at most 7 weight-% or at most 5 weight-%. In a preferred embodiment, the nutrient medium comprises at least one vitamin derivative in an amount of from 0.001 weight-% to 15 weight-%, or of from 0.005 weight-% to 10 weight-%. In a particular preferred embodiment, the nutrient medium comprises at least one vitamin derivative in an amount of from 0.001 weight-% to 9 weight-%, of from 0.005 weight-% to 7 %. The nutrient medium may comprise para-aminobenzoic acid. The para-aminobenzoic acid is used by the cannabis plant for the folic acid related metabolisms and thereby increases the growth rate of the cannabis plant. The nutrient medium may comprise myo-inositol. Preferably, the nutrient medium comprises myo-inositol, para-aminobenzoic acid and combinations thereof.

Preferably, the weight amount of myo-inositol exceeds the weight amount the sum of vitamins. Preferably, the weight-% amount of myo-inositol in the nutrient medium exceeds the weight-% amount of the sum of vitamins by a factor of at least 1.1, at least 1.2 times, at least 1.3, at least 1.4, at least 1.5, or at least 1.6. The myo-inositol improves the growth and health of the cannabis plants.

In a preferred embodiment, the nutrient medium comprises the following components:

| **Component** | **Content (weight-%)** |
|---|---|
| Carbohydrates | 0.1-30 |
| Amino acids | 0.001-35 |
| Vitamins | 0.001-15 |
| Vitamin derivatives | 0.001-15 |

For example, the carbohydrates comprise sucrose, the amino acids are L-amino acids, the vitamins comprise vitamin B1 and vitamin B2, and the vitamin derivative comprises myo-inositol.

In a preferred embodiment, the nutrient medium comprises the following components:

| **Component** | **Content (weight-%)** |
|---|---|
| Primary nutrients | 0.005-10 |
| Secondary nutrients | 0.001-10 |
| Micronutrients | 0.001-4 |
| Carbohydrates | 0.1-30 |
| Amino acids | 0.001-35 |
| Vitamins | 0.001-15 |
| Vitamin derivatives | 0.001-15 |

In a preferred embodiment, the nutrient medium comprises the following components:

| **Component** | **Content (weight-%)** |
|---|---|
| Nitrogen source | 0.05-8 |
| Phosphorus source | 0.05-8 |
| Potassium source | 0.05-8 |
| Secondary nutrients | 0.001-10 |
| Micronutrients | 0.001-4 |
| Carbohydrates | 0.1-30 |
| Amino acids | 0.001-35 |
| Vitamins | 0.001-15 |
| Vitamin derivatives | 0.001-15 |

In a preferred embodiment, the nutrient medium comprises the following components:

| **Component** | **Content (weight-%)** |
|---|---|
| Urea or derivative thereof | 0.005-10 |
| Chelating agent | 0.001-20 |
| Preservative | 0.001-15 |
| Carrier agent | 0.001-12 |
| Nitrogen source | 0.05-8 |
| Phosphorus source | 0.05-8 |
| Potassium source | 0.05-8 |
| Secondary nutrients | 0.001-10 |
| Micronutrients | 0.001-4 |
| Carbohydrates | 0.1-30 |
| Amino acids | 0.001-35 |
| Vitamins | 0.001-15 |
| Vitamin derivatives | 0.001-15 |

The nutrient medium during the growth phase should support the growth of leaves as well as photosynthesis. Therefore, the growth medium may comprise at least one micronutrient A in a higher amount than the flowering medium. Such a micronutrient A is for example copper. A higher amount of at least one micronutrient A in the growth medium compared to the flowering medium improves the growth of the cannabis plant. Preferably, the weight amount of the at least one micronutrient A in the growth medium exceeds the weight amount of the at least one micronutrient A in the flowering medium by a factor of at least 1.1, at least 1.2, at least 1.3, at least 1.4, or at least 1.5. Preferably, the weight amount of the at least one micronutrient A in the growth medium exceeds the weight amount of the at least one micronutrient A in the flowering medium by a factor of at most 10, at most 9, at most 8, at most 7, at most 6, or at most 5.

Preferably, the flowering medium comprises at least one micronutrient in a higher amount than the growth medium. The cannabis plant synthesizes large amounts of active ingredients during the flowering phase. Therefore, the nutrient medium during the flowering phase should fuel the anabolic pathways for active ingredient synthesis as well as support the activity of enzymes involved in active ingredient anabolic pathways. Therefore, the flowering medium may comprise at least one micronutrient B in a higher amount than the growth medium. Such a micronutrient B is for example boron and/or manganese. A higher amount of at least one micronutrient B in the growth medium compared to the flowering medium improves the growth of the flowers and the synthesis of active ingredients. Preferably, the weight amount of the at least one micronutrient B in the flowering medium exceeds the weight amount of the at least one micronutrient B in the growth medium by a factor of at least 1.1, at least 1.2, at least 1.3, at least 1.4, or at least 1.5. Preferably, the weight amount of the at least one micronutrient B in the flowering medium exceeds the weight amount of the at least one micronutrient B in the growth medium by a factor of at most 10, at most 9, at most 8, at most 7, at most 6, or at most 5.

Preferably, the flowering medium comprises at least one vitamin in a higher amount than the growth medium. In embodiments, the amount of at least one vitamin X in the flowering medium is higher than in the growth medium. Such a vitamin X is for example vitamin B6. In embodiments, the weight amount of at the least one vitamin X in the flowering medium exceeds the weight amount of the at least one vitamin X in the growth medium by a factor of at least 1.09, at least 1.1, at least 1.2, at least 1.3, at least 1.4, at least 1.5, or at least 1.6. The higher amount of the at least one vitamin X improves anabolic pathways and improves the synthesis rate of active ingredients. In embodiments, the weight amount of the at least one vitamin X in the flowering medium exceeds the weight amount of the at least one vitamin X in the growth medium by a factor of at most 16, at most 15, at most 12, at most 10, at most 8, or at most 5. In a preferred embodiment, the weight amount of the at least one vitamin X in the flowering medium exceeds the weight amount of the at least one vitamin X in the growth medium by a factor of from 1.1 to 15, or of from 1.2 to 12, or of from 1.3 to 10.

In embodiments, the amount of at least one vitamin in the flowering medium is lower than in the growth medium. Such a vitamin Y is for example vitamin B3. Preferably, the weight amount of at least one vitamin Y in the flowering medium is lower than the weight amount of at least one vitamin Y in the growth medium by a factor of at least 1.08, at least 1.09, at least 1.1, at least 1.2, at least 1.3, at least 1.4, or at least 1.5. The higher amount of at least one vitamin Y improves the photosynthesis rate and the growth rate of the cannabis plant. Preferably, the weight amount of at least one vitamin Y in the flowering medium is lower than the weight amount of at least one vitamin Y in the growth medium by a factor of at most 15, at most 12, at most 11, at most 10, at most 9, at most 8. In a preferred embodiment, the weight amount of at least one vitamin Y in the flowering medium is lower than the weight amount of at least one vitamin Y in the growth medium by a factor of from 1.08 to 15, or of from 1.1 to 11, or of from 1.2 to 9.

The flowering medium may comprise the phosphorus source in a weight amount of at least 1.05 times the weight amount of phosphor source in the growth medium. The flowering medium may comprise the phosphorus source in a weight amount of at least 1.05 times the weight amount of phosphorus source in the growth medium. Preferably, the weight amount of the phosphorus source in the flowering medium exceeds the weight amount of the phosphor source in the growth medium by a factor of at least 1.1, at least 1.2, at least 1.3, at least 1.4, or at least 1.5. The higher amount of phosphorus source improves the metabolism of the cannabis plant and increases the synthesis of active ingredients. Preferably, the weight amount of phosphorus source in the flowering medium exceeds the weight amount of phosphorus source in the growth medium by a factor of at most 10, at most 9, at most 8, at most 7, at most 6, or at most 5. In a preferred embodiment, the weight amount of phosphorus source in the flowering medium exceeds the weight amount of phosphorus source in the growth medium by a factor of from 1.1 to 10, or of from 1.2 to 9, or of from 1.3 to 8.

Preferably, the weight amount of potassium in the flowering medium exceeds the weight amount of potassium in the growth medium by a factor of at least 1.05, at least 1.1, at least 1.2, at least 1.3, at least 1.4 , at least 1.5, or at least 1.6. A higher amount of potassium promotes flowering of the cannabis plant. Preferably, the weight amount of potassium in the flowering medium exceeds the weight amount of potassium in the growth medium by a factor of at most 15, at most 12, at most 9, at most 8, at most 7, or at most 6. In a preferred embodiment, the weight amount of potassium in the flowering medium exceeds the weight amount of potassium in the growth medium by a factor of from 1.1 to 12, or of from 1.2 to 9, or of from 1.3 to 8.

In embodiments, the nutrient medium comprises nitrogen derived from nitrate, urea, ammonium and combinations thereof. In embodiments, the nutrient medium comprise nitrogen derived from a mixture of nitrate, urea and ammonium. In embodiments, the nutrient medium comprises urea-derived nitrogen in a higher amount than nitrate-derived nitrogen. This nitrogen source preferably is used for the growth medium. Urea-derived nitrogen can be more readily absorbed and metabolized by the plant than nitrate-derived nitrogen, thus improving the growth of the cannabis plant. In an alternative embodiment, the amount of urea-derived nitrogen is lower than nitrate-derived nitrogen. This nitrogen source preferably is applied for the growth medium. Preferably, the weight amount of urea-derived nitrogen in the growth medium exceeds the weight amount of urea-derived nitrogen in the flowering medium. Thereby, the growth rate of the cannabis plant is increased. Preferably, the weight amount of ammonium-derived nitrogen in the growth medium is lower than the weight amount of ammonium-derived nitrogen in the flowering medium. Thereby, the growth rate of the cannabis plant is increased.

In embodiments, the weight amount of primary nutrients in the propagation medium is lower than the weight amount of primary nutrients in the growth medium by a factor of at least 1.5, at least 2, at least 3, at least 4, at least 5, at least 6, or at least 7.

In embodiments, the weight amount of secondary nutrients in the propagation medium is lower than the weight amount of primary nutrients in the growth medium by a factor of at least 1.5, at least 2, at least 3, at least 4, at least 5, at least 6, or at least 7 times lower.

In embodiments, the weight amount of primary nutrients in the propagation medium is lower than the weight amount of primary nutrients in the flowering medium by a factor of at least 1.5, at least 2, at least 3, at least 4, at least 5, at least 6, or at least 7.

In embodiments, the weight amount of secondary nutrients in the propagation medium is lower than the weight amount of primary nutrients in the flowering medium by a factor of at least 1.5, at least 2, at least 3, at least 4, at least 5, at least 6, or at least 7 times lower.

The propagation medium as mentioned above facilitates a basic supply of nutrients to the roots and does not supply too many primary nutrients, which would boost photosynthesis too much. Instead, by the medium as mentioned above, the photosynthesis rate during the propagation should not be too high in order to facilitate the cannabis plant to growth roots instead of leaves.

Preferably, the nutrient medium further comprises at least one plant extract. Plant extract can for example be whole plant extract, fruit extract, peel extract and leaf extract. The plant extract improves the health and vigor and boosts growth of the cannabis plant.

In embodiments, the nutrient medium further comprises at least one fruit enzyme. The fruit enzyme can be derived from for example papaya, pineapple, kiwifruit and combinations thereof. The fruit enzyme improves the health and vigor and boosts growth of the cannabis plant.

In embodiments, the nutrient medium further comprises at least one plant syrup. The plant syrup is for example syrup from sugar plants such as sugar cane and/or syrup from fruits. The plant syrup enzymes improve the health and vigor and boosts growth of the cannabis plant.

In embodiments, the nutrient medium further comprises nucleobase or derivatives thereof. Derivatives are for example nucleosides or nucleotides. Thereby, the cannabis plant does not need to synthesize these molecules that are needed for DNA synthesis or ATP synthesis and the cannabis plant can use more energy on anabolic pathways such as cannabinoid synthesis.

In embodiments, the nutrient medium comprises O₂ in an amount (w/w) of at least 10 ppm, at least 20 ppm, at least 30 ppm, at least 40 ppm, at least 50 ppm, at least 60 ppm, or at least 70 ppm. In embodiments, the nutrient medium comprise O₂ in an amount (w/w) of at most 8,000 ppm, at most 7,000 ppm, at most 6,000 ppm, at most 5,000 ppm, at most 4,000 ppm, at most 1,000 ppm, or at most 500 ppm. The O₂ concentration can be achieved for example by O₂ gassing of the nutrient medium tank or by using aquarium stones. The higher O₂ concentration improves the metabolism and the photosynthesis rate of the cannabis plant. However, a too high concentration of O₂ impairs the health and growth of the cannabis plant. In a preferred embodiment, the nutrient medium comprises O₂ in an amount (w/w) of from 20 ppm to 4,000 ppm, of from 30 ppm to 1,000 ppm, or of from 50 ppm to 1,000 ppm.

The nutrient medium may have a temperature of at least 10°C when the nutrient medium is applied to the cannabis plant for example by spraying. In embodiments, the nutrient medium may have a temperature of at least 11°C, at least 12°C, at least 13°C, or at least 14°C. The nutrient medium may have a temperature of at most 38°C, at most 35°C, at most 33°C, at most 31°C, or at most 30 °C. A high temperature of the nutrient medium improves the health of the cannabis plant. However, a too high temperature impairs the health of the cannabis plant. In a preferred embodiment, the nutrient medium has a temperature of from 15°C to 28°C, of from 16°C to 27°C, or of from 17°C to 26°C. In a particular preferred embodiment, the nutrient medium has a temperature of from 18°C to 24°C.

The nutrient medium may have a pH of higher than 2.0, higher than 2.2, higher than 2.4, higher than 2.6, higher than 2.8, higher than 3.2, higher than 3.3, higher than 3.5. The nutrient medium may have a pH of lower than 9.0, lower than 8.8, lower than 8.6, lower than 8.4, lower than 8.1, lower than 7.8, lower than 7.4, lower than 7.2, more preferably lower than 7.0, or lower than 6.6. A higher pH improves the health and growth of the cannabis plant. However, a too high pH negatively affects the health of the cannabis plant. In a preferred embodiment, the nutrient medium has a pH of from 2.0 to 8.0, of from 2.5 to 7.8, or of from 2.5 to 7.5, or of from 3.0 to 7.1.

Preferably, the pH of the propagation medium is higher than the pH of the growth medium. Preferably, the pH of the propagation medium is higher than the pH of the flowering medium. A higher pH improves root formation of the cannabis plant. Preferably, the pH of the growth medium is lower than the pH of the flowering medium. A lower pH improves the growth of the cannabis plant.

The nutrient medium as described contributes to healthier and more vigorous cannabis plants with stronger leaves and flowers. The cannabis plants are less susceptible to pathogens. If the propagation medium is applied to the propagation phase, root formation of the cannabis plant will be improved. The cannabis plant will grow more and longer roots, thereby increasing the absorption of nutrients and further stimulating growth. Surprisingly, the nutrient medium decreases the distance between leaves, thereby increases the leaf density. The growth medium contributes to an increase in the photosynthesis rate and the growth rate of the cannabis plant. The flowering medium contributes to an increase in the number of buds per plant as well as the size and amount of flowers per plant. The nutrient medium also increase the activity of enzymes of the cannabinoid anabolism, thereby increasing the amount of cannabinoids in the flowers.

### Environmental factors

The temperature of the gas mixture (atmosphere) during light exposure and during absence of light exposure should be kept in an optimal range. Preferably, the temperature during light exposure is at least 15°C, at least 17.5°C, at least 18°C, at least 18.5°C, at least 19°C, at least 19.5°C, at least 20°C, at least 20.5°C, or at least 21°C. The temperature during light exposure is at most 33°C, at most 32°C, at most 31°C, or at most 30°C. Preferably, the temperature during absence of light exposure is at least 14°C, at least 14.5°C, at least 15°C, at least 15.5°C, at least 16°C, at least 16.5°C, at least 17°C, or at least 21°C. The temperature during absence of light exposure is at most 35°C, at most 31°C, at most 30°C, at most 29°C, or at most 25. In a preferred embodiment, the temperature of the gas mixture during light exposure is of from 17.5°C to 33°C, or of from 18°C to 32°C, or of from 18.5°C to 32°C. If the temperature is too low, active ingredients such as for example THC are decreased. A too low temperature also impairs the growth of the cannabis plant. A sufficient temperature leads to an increased photosynthesis rate, an improved growth, a higher content of active ingredients such as THC and a healthier cannabis plant. However, if the temperature is too high, the content of active ingredients such as for example THC will be decreased. Furthermore, the growth of the cannabis plant will be impaired. The temperature as mentioned above is preferably used during the propagation phase and/or the growth phase and/or the flowering phase.

Preferably, the temperature during the flowering phase is at least 0.2°C higher than during the growth phase, more preferably the temperature is higher by at least 0.4°C, at least 0.6°C, at least 0.8°C, at least 1°C, at least 1.2°C, at least 1.4°C, at least 1.6°C, or at least 1.8°C. Preferably, the temperature during the flowering phase is at most 15°C higher than during the growth phase, more preferably at most 12°C, at most 10°C, at most 9°C, at most 8°C, at most 7°C, or at most 6°C. In a preferred embodiment, the temperature during the flowering phase is higher than during the growth phase by of from 0.2°C to 8°C, or of from 0.6°C to 7°C, or of from 0.8°C to 7°C.

Preferably, the temperature during the flowering phase is at least 0.2°C higher than during the propagation phase, more preferably the temperature is higher by at least 0.4°C, at least 0.6°C, at least 0.8°C, at least 1°C, at least 1.2°C, at least 1.4°C, at least 1.6°C, or at least 1.8°C. Preferably, the temperature during the flowering phase is at most 15°C higher than during the propagation phase, more preferably at most 12°C, at most 10°C, at most 9°C, at most 8°C, at most 7°C, or at most 6°C. In a preferred embodiment, the temperature during the flowering phase is higher than during the propagation phase by of from 0.2°C to 8°C, or of from 0.6°C to 7°C, or of from 0.8°C to 7°C. A higher temperature increases the growth rate of the flowers. The cannabis plant will grow more and larger flowers. Furthermore, the active ingredient profile will improve. However, if the temperature is too high, the growth of the flowers will be impaired and the active ingredient profile will be impaired. The higher temperature during the flowering phase compared to the growth phase and/or propagation phase is preferably used during light exposure and/or during absence of light exposure.

It is important, that variations in the temperature, which the cannabis plant and or the cannabis material is exposed to, are kept low. The variation of the temperature is the difference between minimum temperature and maximum temperature within the time interval under evaluation, such as during light exposure. The mean temperature is the arithmetic mean of the temperature under evaluation, e.g. the arithmetic mean of 10 equally distributed measurements. Therefore, temperature variation preferably is at most 10%, more preferably at most 8%, more preferably at most 6%, more preferably at most 4%, more preferably at most 3%, more preferably at most 2%, more preferably at most 1%, more preferably at most 0.5%. If the variation in temperature is too high, the consistency and reproducibility of active ingredients of the cannabis plant and/or cannabis material will be impaired. Furthermore, the photosynthesis rate and the growth of the cannabis plant decreases. An improved photosynthesis rate increases the absorption of nutrients from the nutrient medium by the cannabis plant. Thereby, the growth rate is improved and the synthesis rate of active ingredients by the cannabis plant are improved. The temperature variation preferably applies for the gas mixture temperature and/or the nutrient medium. The temperature variation of the gas mixture preferably applies for the propagation phase, the growth phase, the flowering phase, the harvesting and/or the drying. The temperature variation of the nutrient medium preferably applies during the propagation phase, the growth phase and/or the flowering phase. If the temperature during the harvesting and/or the drying is too high, the content of active ingredients will decrease.

The humidity of the gas mixture within the indoor room affects the growth and flowering of the cannabis plant. The term humidity refers to relative humidity. The humidity can be measured using a hygrometer known to the skilled person. The humidity preferably is at least 25%, more preferably at least 29%, more preferably at least 31%, more preferably at least 33%, more preferably at least 35%, more preferably at least 37%, more preferably at least 39%, more preferably at least 41%. Preferably, the humidity is at most 95%, more preferably at most 85%, more preferably at most 75%, more preferably at most 72%, more preferably at most 68%, more preferably at most 64%, more preferably at most 60%. In a preferred embodiment, the humidity is of from 25% to 95%, or of from 29% to 85%, or of from 31% to 75%, or of from 33% to 72%. A too low humidity impairs the photosynthesis rate and the growth rate. A higher humidity improves the growth rate of the cannabis plant. If the humidity is too high, the cannabis plant becomes more vulnerable to the growth of pests like bacteria and fungi. This causes stress to the plant and decreases the photosynthesis rate. A decreased photosynthesis rate negatively affects the active ingredient content and ratio. The humidity as mentioned above preferably applies during the propagation phase, the growth phase and/or the flowering phase.

The variation in the humidity should be kept low. The variation in the humidity is the difference between minimum humidity and maximum humidity within the time interval under evaluation, such as during the flowering phase. The mean humidity is the arithmetic mean of the humidity under evaluation, e.g. the arithmetic mean of 10 equally distributed measurements. In embodiments, the humidity variation is at most 10%, more preferably at most 8%, more preferably at most 6%, more preferably at most 4%, more preferably at most 3%, more preferably at most 2%, more preferably at most 1%, more preferably at most 0.5%. If the variation in humidity is too high, the photosynthesis rate and growth will be impaired. The humidity variation preferably applies during the propagation phase and/or during the growth phase and/or during the flowering phase. It is important to keep the humidity variation low during the flowering phase. A lower humidity variation improves the quality of the flowers and the amount of flower resulting in a higher harvesting yield. Furthermore, the humidity variation applies during the harvesting and/or during the drying . If the humidity variation during these steps is too high, the active ingredient content will decrease.

Preferably, the mean humidity during the flowering phase is at least 1% higher than during the growth phase, more preferably at least 2% higher, at least 2.5% higher, at least 3% higher, at least 3.5% higher, at least 4% higher, or at least 4.5% higher. The humidity during the flowering phase is at most 40% higher than during the growth phase, more preferably at most 35%, at most 30%, at most 25%, at most 20%, at most 15% or at most 10%. In a preferred embodiment, the humidity during the flowering phase is higher than during the growth phase by of from 1% to 30%, or of from 3% to 20%, or of from 4% to 15%. A higher humidity during the flowering phase compared to the growth phase and/or the propagation phase improves flowering and the content and ratio of active ingredients.

Preferably, the mean humidity during the propagation phase is at least 1% higher than during the flowering phase, more preferably at least 2% higher, at least 3% higher, at least 4% higher, at least 5% higher, at least 6% higher, or at least 7% higher. The humidity during the propagation phase is at most 50% higher than during the flowering phase, more preferably at most 40%, at most 30%, at most 25%, at most 20%, at most 15%, or at most 10%. In a preferred embodiment, the humidity during the propagation phase is higher than during the flowering phase by of from 2% to 30%, or of from 4% to 25%, or of from 5% to 15%. A higher humidity during the propagation phase compared to the flowering phase increases the growth rate of the cannabis clone.

Preferably, the cannabis plant is exposed to CO₂ gassing. Preferably, the CO₂ gassing is applied during the propagation phase, the growth phase and/or the flowering phase. In particularly preferred embodiments, the CO₂ gassing is applied during the flowering phase. The CO₂ gassing improves the photosynthesis rate of the cannabis plant. Surprisingly, the CO₂ gassing improves the cannabinoid content of the sterilized plant material. In some embodiments, no CO₂ gassing is carried out during the growth phase. In embodiments, no CO₂ gassing is applied during absence of lighting. CO₂ gassing can be achieved for example by a HVAC-systems known to the skilled person. The HVAC-system can comprise ventilators which are present in the upper and at the lower part of the indoor room. CO₂ inlet into the indoor room can for example be carried out using the upper ventilators and outlet can for example be carried out using the lower ventilators. After inlet of the CO₂ into the indoor room the CO₂ sinks to the lower part of the indoor room , thereby circumventing and covering the leaves of the cannabis plant. Thereby the leaves of the cannabis plant can absorb the CO₂. Preferably, the concentration of CO₂ is at least 400 ppm (v/v) at 26°C, more preferably at least 450 ppm, at least 500 ppm, at least 550 ppm, at least 600 ppm, at least 650 ppm, at least 700 ppm, at least 750 ppm, at least 700 ppm, at least 850 ppm, at least 800 ppm, at least 900 ppm, at least 950 ppm, or at least 1,000 ppm. Preferably, the concentration of CO₂ is at most 13000 ppm (v/v) at 26°C, more preferably at most 4500 ppm, at most 5500 ppm, at most 5000 ppm, at most 4500 ppm, at most 4000 ppm, at most 3500 ppm, at most 3000 ppm, at most 2500 ppm, or at most 2000 ppm. In a preferred embodiment, the concentration of CO₂ (v/v) at 26°C is of from 450 ppm to 5500 ppm, or of from 600 ppm to 4000 ppm, or of from 700 ppm to 3000 ppm. Preferably, the CO₂ concentration is applied during the propagation phase, the growth phase and/or the flowering phase. The CO₂ concentration as mentioned above improves the photosynthesis rate. Thereby the growth rate of the cannabis plant is increased. The cannabis plant also has more energy to grow flowers. Surprisingly, the CO₂ concentration improves the cannabinoid content of the cannabis plant and/or the cannabis material. In a particular preferred embodiment the concentration of CO₂ during the flowering phase is of from 800 ppm to 2000 ppm, or of from 900 ppm to 1800 ppm. CO₂ gassing during the flowering phases was surprisingly found to increase the yield of cannabis material.

Preferably, the CO₂ concentration during the flowering phase is higher than during the growth phase. Preferably, the CO₂ concentration (v/v) during the flowering phase is higher than during the growth phase by at least 50 ppm, at least 80 ppm, at least 100 ppm, at least 120 ppm, at least 140 ppm, at least 160 ppm, at least 180 ppm, at least 200 ppm, or at least 220 ppm. In embodiments, the CO₂ concentration (v/v) during the flowering phase is higher than during the growth phase by at most 10,000 ppm, at most 9,000 ppm, 8,000 ppm, at most 7,000 ppm, at most 5,000 ppm, at most 3,000 ppm, at most 2,000 ppm, or at most 1,800 ppm. Preferably, the CO₂ concentration during the flowering phase is higher than during the propagation phase. Preferably, the CO₂ concentration (v/v) during the flowering phase is higher than during the propagation phase by at least 50 ppm, at least 80 ppm, at least 100 ppm, at least 120 ppm, at least 140 ppm, at least 160 ppm, at least 180 ppm, at least 200 ppm, or at least 220 ppm. In embodiments, the CO₂ concentration (v/v) during the flowering phase is higher than during the propagation phase by at most 10,000 ppm, at most 9,000 ppm, 8,000 ppm, at most 7,000 ppm, or at most 6000 ppm. In a preferred embodiment, the CO₂ concentration during the flowering phase is higher than during the growth phase by of from 50 ppm to 5,000 ppm, or of from 200 ppm to 2,000 ppm. A higher CO₂ concentration during the flowering phase compared to the growth phase and/or propagation phase improves the concentration and ratio of active ingredients. In embodiments, the volumetric CO₂ concentration of the gas mixture during the flowering phase is higher than during the growth phase. In addition, the ratio of CO₂ to O₂ in the gas-mixture affects the behavior of the cannabis plant. Preferably, the cannabis plant is exposed to a gas mixture comprising a volume ratio of CO₂/O₂ of at least 0.0025, at least 0.0026, at least 0.0027, at least 0.003, at least 0.0035, at least 0.004, or at least 0.0045. Preferably, the volume ratio of CO₂/O₂ is applied during the propagation phase, the growth phase and/or the flowering phase. A higher volume ratio of CO₂/O₂ improves the photosynthesis rate. Surprisingly, a higher volume ratio of CO₂/O₂ leads to a higher concentration of active ingredients as well an improved ratio thereof. In a preferred embodiment, the volume ratio of CO₂/O₂ is applied during the flowering phase. In a particular preferred embodiment, the volume ratio of CO₂/O₂ during the flowering phase is at least 0.0035, or at least 0.004.

Preferably, the method has a high gas mixture exchange rate. For example, the HVAC-system can be used to frequently exchange the gas mixture in the indoor room. Gas mixture exchange rate is a measure of how many times the volume of the gas mixture within the indoor room is exchanged per hour. The gas mixture exchange rate can be measured at 21°C. In embodiments, the gas mixture exchange rate is at least 3, at least 4, at least 5, at least 6, at least 7, at least 8, or at least 9. In embodiments, the gas mixture exchange rate is at most 100, at most 80, at most 60, at most 40, at most 30, or at most 20. In a preferred embodiment, the gas mixture exchange rate is of from 3 to 60, of from 5 to 40, of from 7 to 30. In a particular preferred embodiment, the gas mixture exchange rate is of from 8 to 20. Preferably, the gas mixture exchange rate is applied during the propagation phase, the growth phase and/or the flowering phase. The gas mixture exchange rate can also be applied during the harvesting, the drying, the sterilization and/or the extraction. A higher gas mixture exchange rate during the propagation phase, the growth phase and/or the flowering phase improves the coverage of the leaves with CO₂ thereby increasing the absorbance of CO₂ by the cannabis plant and improving the photosynthesis rate. A higher gas mixture exchange rate also reduces the level of gaseous endogenous plant molecules in the gas mixture such as terpenes, cannabinoids, phytohormones, growth factors and other plant factors. Thereby, unwanted autocrine signaling, negative or positive feedback loops and other effects of these gaseous endogenous plant molecules on photosynthesis, growing, flowering and metabolism of the cannabis plant is reduced. This allows a more controllable cultivation of the cannabis plant through the exogenous factors applied such as the nutrient medium. However, if the gas mixture exchange rate is too high, the gas mixture flow velocity is increased to strongly and the growth and flowering of the cannabis plant is impaired. If the gas mixture exchange rate is applied to the harvesting, the drying, the sterilization and/or the extraction, the preservation of active ingredients in the cannabis material is improved.

Preferably, the method is at least partially automated. Automated means that parameters can be controlled, adjusted and configured automatically. Automated parameters for example can be concentration of ingredients of the nutrient medium, CO₂ concentration of the air, O₂ concentration of the nutrient medium, light spectrum, light intensity, lighting duration, gas mixture temperature, humidity of the air, temperature of the nutrient medium, gas mixture exchange rate. Automated systems and/or algorithms for plant cultivation, harvesting and processing are known to the skilled person. Preferably, automation is applied for the growth phase, the flowering phase, the harvesting, the drying, the sterilization and/or the extraction. Automation allows to control environmental factors which influence the behavior of the cannabis plant and/or the cannabis material. Thereby, a higher photosynthesis rate, a higher yield of cannabis material with improved and consistent quality can be achieved. By automatization suboptimal amount of single factors can be avoided. Automatization ensures consistency and reproducibility of purity and quality of the cannabis material as well as concentrations of active ingredients thereof.

In a particular preferred embodiment, the temperature of the gas mixture during light exposure is of from 17.5°C to 33°C, the concentration of CO₂ (v/v) at 26°C is of from 450 ppm to 5500 ppm, and the gas mixture exchange rate is of from 3 to 60.

In a particular preferred embodiment, the temperature during the flowering phase is higher than during the growth phase by of from 0.2°C to 8°C, and the humidity during the flowering phase is higher than during the growth phase by of from 1% to 30%.

### Post-cultivation processing of the cannabis material

Preferably, the flowering cannabis plant is subjected to harvesting. Harvesting comprises for example cutting off the cannabis plant by cutting the main stem at its lower part and above the roots, and cutting of and collecting the flowers from the stems of the harvested cannabis plant. Preferably, harvesting further comprises trimming to further separate the cut off and collected flowers from other unnecessary parts of the cannabis plant such leaves and parts of stems which may not contain large amounts of active ingredients. It is preferred that after trimming substantially pure flowers with little or no other pieces from other parts of the cannabis plant are obtained. It is important to damage the flowers as little as possible during harvesting and in particular during trimming. It is desired to keep the amount of flaws of the flowers low. Flaws are for example cuts, damages, breaks, cracks, fractures and other damages with a length of at least 3 mm to the cannabis material. Therefore, the harvesting may comprise machine cutting of harvested cannabis material. Preferably, the trimming comprises machine cutting. The application of machine cutting during trimming leads to a reduced number of flaws and damages of the harvested cannabis flowers. Preferably, the flowers are not further cut into smaller pieces after trimming. The trimmed cannabis material preferably has a number of flaws per piece of at most 50, at most 40, at most 30, at most 20, 10, at most 9, at most 8, at most 7, at most 5, at most 4, or at most 3. In a preferred embodiment, the trimmed cannabis material has a number of flaws per piece of at most 10, or at most 5.

Preferably, trimming forms a plurality of cannabis material pieces, wherein the pieces have a length of at least 0.5 cm, at least 0.8 cm, at least 1 cm, at least 1.2 cm, at least 1.5 cm, or at least 2 cm. The pieces have a length of at most 100 cm, at most 90 cm, at most 80 cm, at most 70 cm, at most 60 cm, at most 50 cm, or at most 40 cm. A longer length leads to an increased cannabinoid content after further processing of the sterilized cannabis material. However, if the length is too long, sterilization of the cannabis material will be impaired. The trimmed pieces preferably show a high uniformity. Preferably, the variation in length of the cut plant material is less than 40%, less than 30%, less than 25%, less than 20%, less than 15%, less than 10%, less than 8%, less than 5%, or less than 3%. A more uniform cut pieces allow for a in improved drying with less variation in dryness, thereby preserving better the cannabinoids.

The harvested cannabis material can be weighed. The weight after harvesting and before drying is referred to as wet weight. For example, the non-dried flowers are weighed after trimming using a standard scale. The wet weight is normalized to the cultivation area of one horizontal layer of cannabis plants during the flowering phase. One horizontal layer refers to a space wherein cannabis plants are substantially arranged horizontally. For example, several horizontal layers of cannabis plant can be arranged vertically as for example in a vertical farming indoor room. Preferably, the wet weight of harvested cannabis material is at least 0.4 kg/m², at least 0.6 kg/m², at least 0.8 kg/m², at least 1 kg/m², at least 1.2 kg/m², at least 1.4 kg/m², or at least 1.8 kg/m². Preferably, the wet weight of harvested cannabis material is at most 70 kg/m², at most 60 kg/m², at most 50 kg/m², at most 40 kg/m², at most 30 kg/m², at most 20 kg/m², or at most 10 kg/m². In a particular preferred embodiment, the wet weight of harvested cannabis material is of from 0.4 kg/m² to 70 kg/m², or of from 0.6 kg/m² to 60 kg/m², or of from 0.8 kg/m² to 50 kg/m².

After trimming, the pieces such as for example the trimmed flowers can be dried for further processing. During drying the harvested cannabis flowers lose a substantial amount of moisture. Drying substantially influences the taste, mouth feel and consumption experience by the patient and/or consumer and is therefore of great importance. Furthermore, during drying desired forms of active ingredients are obtained. For example, during drying active ingredients such THC are substantially converted from an acidic form into a non-acidic form. The non-acidic form of active ingredients such as THC show higher physiological activity and are particularly desired.

Therefore, the harvested cannabis material may be subjected to drying. During the drying the moisture of the cannabis material is reduced to yield dried cannabis material. During drying the temperature may be high to support fast evaporating of the moisture within the harvested flower. In embodiments the drying is performed at lower temperatures and takes longer. In embodiments, the temperature during the drying is at most 30°C, at most 28°C, at most 27°C, at most 26°C, at most 25°C, or at most 24°C. In embodiments, the temperature during the drying is at least 10 °C, at least 12°C, at least 14°C, at least 15°C, at least 16°C. In a preferred embodiment, the temperature during drying is of from 10°C to 30°C, or of from 12°C to 28°C, or of from 14°C to 27°C, or of from 15°C to 26°C. In a particular preferred embodiment, the temperature during drying is of from 16°C to 24°C. The temperature described above is more gentle and reduces degradation of active ingredients and yields higher amounts of physiological active ingredients. Additionally, the risk of pathogen growth and contamination is reduced. Furthermore, the taste, mouth feel, taste sensation and consumption experience by the patient and/or consumer is improved.

During drying the gas mixture may has a low humidity to support fast evaporating of the moisture within the harvested flower. In embodiments, the humidity is higher and the drying takes longer. During the drying the gas mixture may has a humidity of at least 15%, at least 20%, at least 25%, at least 30%, at least 35%, or at least 40%. Therefore, the gas mixture during the drying may has a humidity of at most 85%, at most 80 %, at most 75 %, at most 70 %, at most 65 %, at most 60 %, or at most 55 %. In a preferred embodiment, the gas mixture during drying has a humidity of from 20% to 80%, or of from 25% to 70%, or of from 30% to 65%. In a particular preferred embodiment, the gas mixture during drying has a humidity of from 35% to 60%. The humidity as mentioned above improves the taste and taste sensation of the cannabis material and products thereof. Furthermore, optimal residual water content of the harvested cannabis material is ensured.

In a preferred embodiment, the temperature during drying is of from 10°C to 30°C, and the gas mixture during drying has a humidity of from 20% to 80%.

Preferably, the dried cannabis material has a residual water content of at least 3% (w/w), of at least 5%, of at least 7%, of at least 9%, of at least 12%, of at least 15%, or of at least 20%. Preferably, the dried cannabis material has a residual water content of at most 50%, of at most 45%, of at most 40%, of at most 35%, or of at most 30%. In a preferred embodiment, the dried cannabis material has a residual water content of from 3% to 50%, or of from 5% to 45%. In a particular preferred embodiment, the dried cannabis material has a residual water content of from 7% to 40%. If the residual water content is too high, the risk of contamination with pathogens increases. Furthermore, a higher residual water content impairs the content of active ingredients. Furthermore, a change in the active ingredient profile during the drying as well as after the drying is decreased. If the residual water content is too low, the amount of desired physiological active ingredients will be decreased and the taste and mouth feel by the consumer and/or patient will be impaired.

To reduce degradation of active ingredients and to yield higher amounts of physiological active ingredients, drying is performed under mild and gentle conditions over a longer period of time instead of applying harsh conditions for a short period of time. Therefore, the duration of drying preferably is at least 4 days, at least 5 days, at least 6 days, at least 7 days, at least 8 days, or at least 9 days. The drying preferably is at most 50, days, at most 40 days, 30 days, at most 25 days, at most 23 days, at most 21, days, at most 20 days, or at most 19 days. In a preferred embodiment, the duration of the drying is of from 4 days to 50 days, of from 5 days to 40 days, or of from 6 days to 30 days.

Preferably, the drying is performed in darkness to prevent degradation of active ingredients. Darkness means that the cannabis material is substantially not exposed to light. Furthermore, when the drying is performed in darkness, desired degradation of chlorophyll is improved.

The dried cannabis material can be weighed in order to evaluate the yield of the harvest. The weight after drying is referred to as dry weight. For example, the dried flowers are weighed after drying using a standard scale. The dry weight is normalized to the cultivation area of one horizontal layer of cannabis plants during the flowering phase. Preferably, the dry weight of harvested cannabis material is at least 50 g/m², at least 100 g/m², at least 150 g/m², at least 200 g/m², at least 250 g/m², at least 300 g/m², or at least 350 g/m². Preferably, the dry weight of harvested cannabis material is at most 70 kg/m², at most 60 kg/m², at most 50 kg/m², at most 40 kg/m², at most 30 kg/m², at most 20 kg/m², or at most 10 kg/m². In a preferred embodiment, the dry weight of harvested cannabis material is of from 50 g/m² to 70 kg/m², of from 100 g/m² to 60 kg/m², or of from 150 g/m² to 50 kg/m².

In a preferred embodiment, the dry weight of harvested cannabis material is of from 50 g/m² to 70 kg/m² and the dried cannabis material has a residual water content of from 3% to 50%.

In a preferred embodiment, the temperature during drying is of from 10°C to 30°C, the gas mixture during drying has a humidity of from 20% to 80%, the drying is performed in darkness, and the duration of the drying is of from 4 days to 50 days.

In a particular preferred embodiment, the temperature during drying is of from 10°C to 30°C, the gas mixture during drying has a humidity of from 20% to 80%, the drying is performed in darkness, the duration of the drying is of from 4 days to 50 days, the dried cannabis material has a residual water content of from 3% to 50%, and the dry weight of harvested cannabis material is of from 50 g/m² to 70 kg/m².

The dried cannabis material is preferably subjected to sterilization. Conventional sterilization of plant material comprises gamma radiation. However, gamma radiation can cause radioactive material that can cause harm to the patient. Gamma radiation can influence the content of active ingredients. Alternative methods are ozone, UV-irradiation, water steam, ultrasonic irradiation, ethylene oxide gassing, gamma rays, or e-beam. All these methods negatively influences the active ingredient content. Furthermore, they mostly sterilize only on the surface of the cannabis material. According to this invention, the cannabis material is preferably exposed to reactive oxygen species. Reactive oxygen species can for example be H₂O₂, O²⁻ or mixtures thereof.

Preferably, during sterilization the dried cannabis material is exposed to a temperature of at least 10°C, at least 12°C, at least 15°C, at least 18°C, or at least 20°C. Preferably, during sterilization the dried cannabis material is exposed to a temperature of most 1,000°C, at most 800°C, at most 600 °C, at most 400°C, at most 200°C, at most 100°C, at most 80°C, at most 60°C or at most 40°C. In a preferred embodiment, the temperature during extraction is of from 10°C to 800°C, of from 12°C to 600°C, or of from 15°C to 400°C. In embodiments, the sterilization is performed under vacuum, e.g. an absolute pressure of less than 0.5 bar.

The sterilization with reactive oxygen species is especially mild and reduces destruction or degradation or unwanted metabolism of active ingredients and preserves them in a higher amount. The sterilization with reactive oxygen species ensures improved sterilization at the surface of the cannabis material as well as inside the cannabis material. The sterilization with reactive oxygen species ensures increased destruction of pathogens such as bacteria, viruses or fungi. The sterilization leads to an increased level of purity and sterility of the cannabis material. Furthermore, waste products of the sterilization cause less harm to humans or the environment. After sterilization the cannabis material can for example be further processed or directly packaged under vacuum. Further processing can for example be extraction and/or purification of active ingredients.

The sterilized cannabis material is in particular suitable for medical applications. The sterilized cannabis material can be used in the manufacture for example of powder, gel, liquid, granulate, wax, oil, crystal, resin, tincture, tablet, capsule, lozenges, dermal patches, dermal sprays, edibles and combinations thereof.

Optionally, the sterilized cannabis material is subjected to extraction to obtain cannabis extract. During the extraction active ingredients are extracted from the cannabis material. For example, cannabis extract can comprise several dozens or hundreds of different cannabinoids, terpenes and other physiological active ingredients from the dried cannabis flowers. Alternatively, a cannabis extract can for example comprise a highly purified and highly concentrated cannabinoid such as THC or CBD and no or only few other active ingredients. Cannabis extract is for example an oil. In embodiments preferably solvents are used for extraction. Solvents for extraction can be chosen for example from CO₂, alkanes, alcohols, and ethers. Solvents for extraction can for example be butane, isopropyl alcohol, ethanol, hexane, toluene, isopropylalkhol or dimethylether. In a preferred embodiments, the solvent is CO₂ and/or Ethanol. The extraction can comprise more than one extraction step. Preferably, in a first extraction step the solvent is CO₂ and in a second extraction step the solvent is Ethanol. For example, CO₂ is applied to dissolve and extract active ingredients from the dried and sterilized flowers. The CO₂ can for example be supercritical or subcritical CO₂. Afterwards the CO₂ is evaporated to obtain solvent free cannabis extract. After a first extraction step, a second extraction step can be applied. For example, the cannabis extract can be subjected to further one or more extraction steps wherein the solvent is Ethanol. Such one or more extraction steps can be for example molecular distillation under vacuum conditions to purify and enrich one or more active ingredients. Afterwards the Ethanol is evaporated to obtain solvent free cannabis extract. The extraction preserves more active ingredients and their ratio. The method leads to reduced level of solvent contamination of the cannabis material.

### Purity of the cannabis material

The cannabis material preferably has a high purity and reduced contamination with impurities such as heavy metals or residual solvents. The impurity can be quantified using ppm (w/w) and can be measured by mass spectrometry. The ppm (w/w) as mentioned above is a measure for the impurity of a substance within the cannabis material. The ppm (w/w) relates to the weight of the cannabis material. One ppm (w/w) is equivalent to an impurity of 1 µg per gram of the material.

To ensure high quality and to avoid harm to the patient, the cannabis material should have low amounts of solvent which may be left in the material from the extraction or another pre-harvest or post-harvest step. The solvent can be for example butane, isopropyl alcohol, ethanol, hexane, toluene or any other solvent used during the extraction or another pre-harvest or post-harvest step. Preferably, the cannabis material has an upper limit of solvent in an amount of at most 10,000 ppm (w/w), more preferably at most 5,000 ppm, more preferably at most 1.000 ppm, more preferably at most 500 ppm, more preferably at most 300 ppm, more preferably at most 100 ppm, more preferably at most 50 ppm, more preferably at most 10 ppm. In embodiments, the cannabis material is free of solvent. Lower amounts of solvent increases the safety and reduces the risk of harm for the patient.

Sometimes, cannabis products are contaminated with heavy metals. The cannabis material of the present invention preferably has reduced amounts of heavy metals. Heavy metals can be for example cadmium, lead, or mercury. Lower amounts of heavy metals increase the safety and reduces the risk of harm for the patient and/or consumer. Preferably, the cannabis material has an upper limit of cadmium in an amount of at most 300 ppm (w/w), more preferably at most 200 ppm, more preferably at most 100 ppm, more preferably at most 50 ppm, more preferably at most 25 ppm, more preferably at most 10 ppm, more preferably at most 5 ppm, more preferably at most 1 ppm. In embodiments, the cannabis material is free of cadmium. Lower amounts of cadmium increase the safety and reduces the risk of harm for the patient and/or consumer.

Preferably, the cannabis material has an upper limit of lead in an amount of at most 300 ppm (w/w), more preferably at most 200 ppm, more preferably at most 100 ppm, more preferably at most 50 ppm, more preferably at most 25 ppm, more preferably at most 10 ppm, more preferably at most 5 ppm, more preferably at most 1 ppm. In embodiments, the cannabis material is free of lead. Lower amounts of lead increases the safety and reduces the risk of harm for the patient and/or consumer.

Preferably, the cannabis material has an upper limit of mercury in an amount of at most 300 ppm (w/w), more preferably at most 200 ppm, more preferably at most 100 ppm, more preferably at most 50 ppm, more preferably at most 25 ppm, more preferably at most 10 ppm, more preferably at most 5 ppm, more preferably at most 1 ppm. In embodiments, the cannabis material is free of mercury. Lower amounts of mercury increases the safety and reduces the risk of harm for the patient and/or consumer.

In a preferred embodiment, the cannabis material has an upper limit of solvent in an amount of at most 500 ppm (w/w), an upper limit of cadmium in an amount of at most 50 ppm (w/w), an upper limit of lead in an amount of at most 50 ppm (w/w), and an upper limit of mercury in an amount of at most 50 ppm (w/w). In a particular preferred embodiment, the plant material is free of solvent, free of cadmium, free of lead and free of mercury.

Sometimes, cannabis products are contaminated with toxins. Preferably, the cannabis material has a reduced contamination with toxins. Such toxins are for example Aflatoxins. Aflatoxins are produced by molds such as Aspergillus flavus which grow for example in soil and decaying vegetation. Aflatoxins are considered to be carcinogens and aflatoxin B₁ is considered to be a strongly toxic type of aflatoxin. The aflatoxins Aflatoxin B₁, Aflatoxin B₂, Aflatoxin G₁ and Aflatoxin G₂ can be produced by molds such as A.flavus and A.parasiticus. Aflatoxin concentrations can be measured by the methods described in the European Pharmacopoeia ("Bestimmung von Aflatoxin B1 in pflanzlichen Drogen (2.8.18)" des Europaischen Arzneibuchs). Lower amounts of such toxins increase the safety and reduces the risk of harm for the patient and/or consumer.

Lower amounts of toxins like for example aflatoxins increase the safety and reduce the risk of harm for the patient. Preferably, the cannabis material has an upper limit of Aflatoxin B1 in an amount of at most 900 µg/kg, more preferably at most 500 µg/kg, more preferably at most 100 µg/kg, more preferably at most 50 µg/kg, more preferably at most 30 µg/kg, more preferably at most 20 µg/kg, more preferably at most 10 µg/kg, more preferably at most 5 µg/kg, more preferably at most 2 µg/kg. In embodiments, the cannabis material is free of Aflatoxin B1. Lower amounts of Aflatoxin B1 increase the safety and reduces the risk of harm for the patient and/or consumer.

Preferably, the cannabis material has an upper limit of the sum of Aflatoxin B1, Aflatoxin B2, Aflatoxin G1 and Aflatoxin G2 in an amount of at most 900 µg/kg, more preferably at most 500 µg/kg, more preferably at most 100 µg/kg, more preferably at most 50 µg/kg, more preferably at most 30 µg/kg, more preferably at most 20 µg/kg, more preferably at most 10 µg/kg, more preferably at most 4 µg/kg. In embodiments, the cannabis material is free of Aflatoxin B1, Aflatoxin B2, Aflatoxin G1 and/or Aflatoxin G2. Lower amounts of the aflatoxins mentioned above increase the safety and reduces the risk of harm for the patient and/or consumer.

Sometimes, cannabis products are contaminated with pathogens. Preferably, the cannabis material has a reduced contamination with pathogens. Pathogens are infectious agents and can be for example microorganisms such as virus, bacterium, protozoan, prion, viroid or fungus. Microbial contamination can be measured according to Ph. Eur. and are known to the skilled person.

The contamination with aerobic microbes of the cannabis material can be measured by Total Aerobic Microbial Count (TAMC) according to Ph.Eur. 2.6.12. TAMC is measured in colony-forming unit (CFU). The measurement can be performed on agar according to DIN EN ISO 4833-1:2013. Preferably, the cannabis material has an upper limit for the Total Aerobic Microbial Count (TAMC) of at most 950,000 CFU/g, more preferably of at most 700,000 CFU/g, more preferably of at most 500,000 CFU/g, more preferably of at most 400,000 CFU/g, more preferably of at most 200,000 CFU/g, more preferably of at most 120,000 CFU/g, more preferably of at most 90,000 CFU/g, more preferably of at most 50,000 CFU/g. In embodiments, the cannabis material is free of aerobic microbes. A lower TAMC increases the safety of the cannabis material and reduces the risk of harm for the patient/and or consumer.

The contamination with yeast and mould of the cannabis material can be measured by Total Combined Yeast and Mould Count (TYMC) according to Ph.Eur. 2.6.12. TYMC is measured in colony-forming unit (CFU). The measurement can be performed on agar according to DIN EN ISO 16212 - 2017. Preferably, the cannabis material has an upper limit for the Total Combined Yeast and Mould Count (TYMC) of at most 9,500 CFU/g, more preferably of at most 7,000 CFU/g, more preferably of at most 5,000 CFU/g, more preferably of at most 4,000 CFU/g, more preferably of at most 2,000 CFU/g, more preferably of at most 1,200 CFU/g, more preferably of at most 900 CFU/g, more preferably of at most 500 CFU/g. In embodiments, the cannabis material is free of yeast and/or mold. A lower TYMC increases the safety of the cannabis material and reduces the risk of harm for the patient/and or consumer.

Preferably, the cannabis material has an upper limit for the amount of bile salts tolerant Gram-negative bacteria of at most 9,500 CFU/g, more preferably of at most 7,000 CFU/g, more preferably of at most 5,000 CFU/g, more preferably of at most 4,000 CFU/g, more preferably of at most 2,000 CFU/g, more preferably of at most 1,200 CFU/g, more preferably of at most 900 CFU/g, more preferably of at most 600 CFU/g, more preferably of at most 300 CFU/g. In embodiments, the cannabis material is free of Gram-negative bacteria. A lower amount of bile salts tolerant Gram-negative bacteria increases the safety of the cannabis material and reduces the risk of harm for the patient/and or consumer.

Preferably, the cannabis material has an upper limit for the amount of Escherichia coli of at most 2,000 CFU/g, more preferably of at most 900 CFU/g, more preferably of at most 400 CFU/g, more preferably of at most 200 CFU/g, more preferably of at most 100 CFU/g, more preferably of at most 50 CFU/g, more preferably of at most 25 CFU/g, more preferably of at most 10 CFU/g, more preferably of at most 5 CFU/g. In embodiments, the cannabis material is free of Escherichia coli. A lower amount of Escherichia coli increases the safety of the cannabis material and reduces the risk of harm for the patient/and or consumer.

Preferably, the cannabis material has an upper limit for the amount of Salmonella of at most 2,000 CFU/25g, more preferably of at most 900 CFU/25g, more preferably of at most 400 CFU/25g, more preferably of at most 200 CFU/25g, more preferably of at most 100 CFU/25g, more preferably of at most 50 CFU/25g, more preferably of at most 25 CFU/25g, more preferably of at most 10 CFU/25g, more preferably of at most 5 CFU/25g. In embodiments, the cannabis material is free of Salmonella. A lower amount of Salmonella increases the safety of the cannabis material and reduces the risk of harm for the patient/and or consumer.

In a preferred embodiment, the cannabis material has an upper limit of Aflatoxin B1 in an amount of at most 30 µg/kg; an upper limit of the sum of Aflatoxin B1, Aflatoxin B2, Aflatoxin G1 and Aflatoxin G2 in an amount of at most 50 µg/kg; an upper limit for the Total Aerobic Microbial Count (TAMC) of at most 400,000 CFU/g; an upper limit for the Total Combined Yeast and Mould Count (TYMC) of at most 4,000 CFU/g; an upper limit for the amount of bile salts tolerant Gram-negative bacteria of at most 2,000 CFU/g; an upper limit for the amount of Escherichia coli of at most 100 CFU/g; and an upper limit for the amount of Salmonella of at most 100 CFU/25g. In a particular preferred embodiment, the cannabis material is free of Aflatoxin B1, free of Aflatoxin B1, Aflatoxin B2, Aflatoxin G1 and Aflatoxin G2, free of aerobic microbes, free of yeast and/or mold, free of Gram-negative bacteria, free of Escherichia coli and free of Salmonella.

### Active ingredients

In preferred embodiments the cannabis extract comprises at least one active ingredient. Active ingredients can be for example terpenes and/or cannabinoids. Preferably, the at least one active ingredient in the cannabis extract is selected from the group consisting of cannabigerolic acid (CBGA), cannabigerovarinic acid (CBGVA), cannabigerol (CBG), cannabigerovarin (CBGV), tetrahydrocannabinolic acid (THCA), tetrahydrocannabivarinic acid (THCVA), tetrahydrocannabinol (THC), tetrahydrocannabivarin (THCV), cannabinolic acid (CBNA), cannabinol (CBN), CBDA, cannabidivarinic acid (CBDVA), cannabidiol CBD, cannabidivarin (CBDV), cannabichromenic acid (CBCA), cannabichromevarinic acid (CBCVA), cannabichromene (CBC), cannabichromevarin (CBCV), cannabicyclol (CBL), cannabicyclolic acid (CBLA) and combinations thereof. In a preferred embodiment, the cannabis extract comprises at least 2 active ingredients, at least 4 active ingredients, at least 6 active ingredients, at least 8 active ingredients, at least 10 active ingredients, or at least 15 active ingredients. In a preferred embodiment, the cannabis extracted comprises THC and CBD. The cannabis extract can be obtained for example by supercritical CO₂ extraction as described herein. For example, a variety of cannabinoids and terpenes is extracted from the flowers of the cannabis material by supercritical CO₂ without further purification and enrichment of a single active ingredient such as THC.

In an alternative embodiment, the cannabis extract is a purified extract and comprises an enriched active ingredient. Such a purified cannabis extract can be obtain for example by CO₂ extraction followed by molecular distillation as described herein. Preferably, the cannabis extract comprises at least one active ingredient in an amount of at least 85% by weight, more preferably 90 % by weight, more preferably 92% by weight, more preferably 94% by weight, more preferably 95% by weight, more preferably 97% by weight. In some embodiments, the cannabis extract comprises at least one active ingredient in an amount of at least 98%. For example, cannabinoids are extracted from the flowers by supercritical carbon dioxide as described herein and afterwards the active ingredient such as THC or CBD is purified and isolated from the extract to give a concentration of 98%.

Tetrahydrocannabinol (THC) is a highly potent cannabinoid. In embodiments, the cannabis material, such as extracted and sterilized oil or sterilized resin or freshly harvested flowers has a THC content of at least 10%, at least 15%, at least 20 %, at least 30 %, at least 40 %, at least 50 %, at least 55 %, at least 60 %, at least 65 %, at least 70 %, at least 75 %, at least 80 %, at least 85 %, at least 90 %, or at least 95 %. THC content means weight-% of dry weight of the cannabis material. A higher THC content increases the yield of THC in the cannabis material. THC may have beneficial effects in the treatment of various diseases.

Cannabidiol (CBD) is a cannabinoid comprised in cannabis material, such as freshly harvested flowers, dried cannabis flowers or extracted and sterilized cannabis resin. In embodiments, the cannabis material has a CBD content of at least 10%, at least 12%, at least 15%, least 20 %, at least 30 %, at least 40 %, at least 50 %, at least 55 %, at least 60 %, at least 65 %, at least 70 %, at least 75 %, at least 80 %, at least 85 %, at least 90 %, or at least 95 %. CBD content means weight-% of dry weight of the cannabis material. A higher CBD content increases the yield of THC in the cannabis material. CBD may have beneficial effects in the treatment of various diseases.

In an embodiment, the cannabis material has a CBD to THC ratio of at least 1:1, at least 1.2:1, at least 1.5:1, at least 1.7:1, at least 2:1, at least 2.5:1, at least 3:1, or at least 5:1. The CBD to THC weight ratio can be beneficial for the medical effect of cannabis. For example, CBD can attenuate unwanted psychoactive effects of THC. In embodiment, the cannabis materials has a CBD to THC ratio of at most 1:50, at most 1:40, at most 1:30, at most 1:20, at most 1:10, or at most 1:5.

The cannabis material is preferably for use in medicine. For use in medical applications it is important that the content of active ingredients in the cannabis material is consistent and reproducible. The variation in the ratio of THC to CBD is the difference between the minimum ratio of THC to CBD and the maximum ratio of THC to CBD of cannabis material under evaluation, such as cannabis material from different plant entities of the same cannabis strain. The mean ratio of THC to CBD is the arithmetic mean of the ratio of THC to CBD under evaluation, e.g. the arithmetic mean of 10 cannabis materials derived from 10 different plant entities of the same cannabis strain In embodiments, variation in the ratio of THC to CBD in the cannabis material from mean is at most 5%, at most 4%, at most 3%, at most 2%, at most 1.5%, at most 1%, at most 0.6%,or at most 0.3%. A lower variation improves safety of the cannabis material for the use in medical applications and reduces the risk of variation of the beneficial as well as side effects of the cannabis material to the patient due to effects of the ratio of THC to CBD.

Tetrahydrocannabinolic acid (THCA) is an active ingredient and a precursor of THC and is decaraboxylated to THC for example when exposed to heating. THC has a higher beneficial effect in therapy than THCA. In embodiments, the cannabis material has a higher THC content than THCA content. In embodiments, the weight ratio of THC to THCA in the cannabis plant material is at least 1:1, at least 1.2:1, at least 1.5:1, at least 1.7:1, at least 2:1, at least 2.5:1, at least 3:1, or at least 5:1.

Cannabidiolic acid (CBDA) is an active ingredient and a precursor of CBD. CBD has a higher beneficial effect in therapy than CBDA. In embodiments, the cannabis material has a higher CBD content than CBDA content. In embodiments, the ratio of CBD to CBDA in the cannabis material is at least 1:1, at least 1.2:1, at least 1.5:1 %, at least 1.7:1, at least 2:1, at least 2.5:1, at least 3:1, or at least 5:1.

Cannabigerol (CBG) is a cannabinoid and a precursor for other cannabinoids. CBD has a higher beneficial effect in therapy than CBG. In embodiments, the cannabis material has a higher CBD content than CBG content. In embodiments, the ratio of CBD to CBG in the cannabis material is at least 1:1, at least 2:1, at least 3:1, at least 4:1, at least 5:1, at least 6:1, at least 8:1, or at least 10:1.

Cannabinol (CBN) is a cannabinoid. CBN has a lower beneficial effect in therapy than THC. In embodiments the cannabis material has a higher THC content than CBN content. In embodiments the ratio of THC to CBN in the cannabis material is at least 1:1, at least 2:1, at least 3:1, at least 4:1, at least 5:1, at least 6:1, at least 8:1, at least 10:1.

Cannabinolic acid (CBNA) is cannabinoid and a precursor for other cannabinoids. CBNA has a lower beneficial effect in therapy than THC. In embodiments the cannabis material has a higher THC content than CBNA content. In embodiments the ratio of THC to CBNA in the cannabis material is at least 1:1, at least 2:1, at least 3:1, at least 4:1, at least 5:1, at least 6:1, at least 8:1, at least 10:1.

### Cannabis material

The cannabis material preferably comprises terpenes such as for example limonene, linalool, α-pinene, β-pinene,caηophylI, myrcen, borneol. The terpenes influence for example the smell, the note, the flavor and/or the aroma of the cannabis material. Terpenes can also have physiological effects on a human being and having beneficial effects during therapy. For example, they can give the cannabis material a flavor of citrus, berry, mint or pine. Furthermore, terpenes can catalyze or inhibit the synthesis of cannabinoids within the cannabis plant. Terpenes can also influence the effect of cannabinoids such as for example THC and CBD. For example, terpenes can bind to the same or different receptors, they can act on neurotransmitters or event together with cannabinoids bind to receptors, thereby modulating the physiological effect of cannabinoids. Terpenes have a lower beneficial effect in therapy than cannabinoids. Therefore, preferably the cannabis material has a higher weight concentration of the sum of terpenes than the sum of cannabinoids. In embodiments, the ratio is at least 1:1, at least 2:1, at least 3:1, at least 4:1, at least 5:1, at least 6:1, at least 8:1, or at least 10:1.

### Preferred embodiments

In a preferred embodiment, the method comprises the following steps:
An indoor method for producing cannabis material according to at least one of the preceding claims, comprising:
a) growing a cannabis clone to obtain a grown cannabis plant (growth phase),
   wherein the duration of the growth phase is at least 2 days;
   wherein the cannabis clone is exposed to light with a PPFD to at least 450 µmol*m⁻²*s⁻¹;
   wherein the cannabis clone is exposed to light for at least 6 h per day;
   wherein the cannabis clone is exposed to light with a CCT of at least 2,000 K;
   wherein the ratio of red to green light is at least 1.1:1;
   wherein the ratio of blue to green light is at least 1.1:1;
   wherein the ratio of red to blue light is at least 0.1:1;
   wherein the growth phase is performed in a cleanroom, wherein the cleanroom comprises not more than 100 million particles with a particle size of larger than 0.5 µm per m³ gas mixture;
   wherein the temperature during light exposure is at least 15°C;
   wherein the temperature during absence of light exposure is at least 14°C;
   wherein the indoor room comprises a gas mixture with a humidity of at least 25%; w
      herein the gas mixture exchange rate is at least 3;
   wherein the cannabis clone is exposed to a growth medium,
      wherein the growth medium comprises at least one chelating agent in an amount of at least 0.001 weight-%,
      wherein the growth medium comprises at least one nitrogen source in an amount of at least 0.005 weight-%;
      wherein the growth medium comprises at least one phosphor source in an amount of at least 0.005 weight-%;
      wherein the growth medium comprises at least one potassium source in an amount of at least 0.005 weight-%;
      wherein the growth medium comprises at least one or more secondary nutrients in sum of at least 0.001 weight-%,
      wherein the growth medium comprises one or more micronutrients in the sum of at least 0.001 weight-%;
      wherein the growth medium comprise one or more carbohydrates in sum in an amount of at least 0.1 weight-%;
      wherein the growth medium comprises one or more amino acids;
      wherein the growth medium comprises at least one vitamin;
      wherein the growth medium comprises at least one vitamin derivative;
      wherein the nutrient medium comprises O₂ in an amount (w/w) of at least 10 ppm;
      wherein the nutrient medium has a temperature of at least 11°C;
      wherein the nutrient medium has a pH of higher than 2.0;
c) subjecting the grown cannabis plant to a flowering phase for obtaining a flowering cannabis plant,
   wherein the duration of the flowering phase is at least 10 days;
   wherein the grown cannabis plant is exposed to light with a PPFD of at least 700 µmol*m⁻²*s⁻¹;
   wherein the grown cannabis plant is exposed to light of at least 6 h per day;
   wherein the grown cannabis plant is exposed to light with a CCT of at least 2,000 K;
   wherein the ratio of red to green light is at least 1.1:1;
   wherein the ratio of blue to green light is at least 1.1:1;
   wherein the ratio of red to blue light is of from 1.2:1;
   wherein the flowering phase is performed in a cleanroom, wherein the cleanroom comprises not more than 100 million particles with a particle size of larger than 0.5 µm per m³ gas mixture;
   wherein the temperature during light exposure is at least 15°C;
   wherein the temperature during absence of light exposure is at least 14°C;
   wherein the indoor room comprises a gas mixture with a humidity of at least 25%;
   wherein the gas mixture exchange rate is at least 3;
   wherein the grown cannabis plant is exposed to a flowering medium,
      wherein the flowering medium comprises at least one chelating agent in an amount of at least 0.001 weight-%,
      wherein the flowering medium comprises at least one nitrogen source in an amount of at least 0.005 weight-%;
      wherein the flowering medium comprises at least one phosphor source in an amount of at least 0.005 weight-%;
      wherein the flowering medium comprises at least one potassium source in an amount of at least 0.005 weight-%;
      wherein the flowering medium comprises at least one or more secondary nutrients in sum of at least 0.001 weight-%,
      wherein the flowering medium comprises one or more micronutrients in the sum of at least 0.001 weight-%;
      wherein the flowering medium comprise one or more carbohydrates in sum in an amount of at least 0.1 weight-%;
      wherein the flowering medium comprises one or more amino acids;
      wherein the flowering medium comprises at least one vitamin;
      wherein the flowering medium comprises at least one vitamin derivative;
      wherein the nutrient medium comprises O₂ in an amount (w/w) of at least 10 ppm;
      wherein the nutrient medium has a temperature of at least 11°C;
      wherein the nutrient medium has a pH of higher than 2.0;
   wherein the grown cannabis plant is exposed to CO₂ gassing, wherein the concentration of CO₂ is at least 500 ppm (v/v) at 26°C ;
c) harvesting cannabis material from the flowering plant to obtain a harvested cannabis material,
   wherein the wet weight of harvested cannabis material is at least 0.4 kg/m²;
   wherein the PPFD exposure of the cannabis plant during the flowering phase compared to the growth phase is higher by a factor of at least 1.1;
   wherein the CCT during the flowering phase is lower than during the growth phase by a factor of at least 1.05;
   wherein the ratio of red to green light during the flowering phase is higher than the ratio of red to green light during the growth phase by a factor of at least 1.1;
   wherein the ratio of blue to green light during the growth phase is higher than during the flowering phase by a factor of at least 1.1;
   wherein the ratio of red to blue light during the flowering phase is higher than during the growth phase by a factor of at least 1.2;
   wherein the temperature during the flowering phase is at least 0.2°C higher than during the growth phase;
   wherein the amount of at least one vitamin in the flowering medium is higher than in the growth medium;
   wherein the amount of at least one micronutrient in the flowering medium is higher than in the growth medium;
   wherein the flowering medium comprise the phosphorus source in a weight amount of at least 1.05 times the weight amount of phosphor source in the growth medium;
   weight amount of potassium in the flowering medium exceeds the weight amount of potassium in the growth medium;
   wherein the mean humidity of the gas mixture in the indoor room during the flowering phase is at least 1% higher than during the growth phase;
   wherein the volumetric CO₂ concentration of the gas mixture during the flowering phase is higher than during the growth phase,

In a preferred embodiment, the method comprises the following steps:
An indoor method for producing cannabis material according to at least one of the preceding claims, comprising:
a) subjecting a cannabis cutting to a propagation phase to obtain the cannabis clone,
   wherein the duration of the propagation phase is at least 2 days;
   wherein the cannabis cutting is exposed to light with a PPFD of at least 400 µmol*m⁻²*s⁻¹;
   wherein the cannabis cutting is exposed to light of at least 8 h per day;
   wherein the cannabis cutting is exposed to light with a CCT of at least 2,000 K;
   wherein the ratio of red to green light is at least 1.1:1;
   wherein the ratio of blue to green light is at least 1.1:1;
   wherein the ratio of red to blue light is at least 0.1:1;
   wherein the propagation phase is performed in a cleanroom, wherein the cleanroom comprises not more than 100 million particles with a particle size of larger than 0.5 µm per m³ gas mixture;
   wherein the temperature during light exposure is at least 17.5°C;
   wherein the temperature during absence of light exposure is at least 14°C;
   wherein the indoor room comprises a gas mixture with a humidity of at least 25%;
   wherein the gas mixture exchange rate is at least 3;
   wherein the cannabis cutting is exposed to a propagation medium,
      wherein the propagation medium comprises at least one chelating agent in an amount of at least 0.001 weight-%,
      wherein the propagation medium comprises at least one nitrogen source in an amount of at least 0.005 weight-%;
      wherein the propagation medium comprises at least one phosphor source in an amount of at least 0.005 weight-%;
      wherein the propagation medium comprises at least one potassium source in an amount of at least 0.005 weight-%;
      wherein the propagation medium comprises at least one or more secondary nutrients in sum of at least 0.001 weight-%,
      wherein the propagation medium comprises one or more micronutrients in the sum of at least 0.001 weight-%;
      wherein the propagation medium comprise one or more carbohydrates in sum in an amount of at least 0.1 weight-%;
      wherein the propagation medium comprises one or more amino acids;
      wherein the propagation medium comprises at least one vitamin;
      wherein the propagation medium comprises at least one vitamin derivative;
      wherein the nutrient medium comprises O₂ in an amount (w/w) of at least 10 ppm;
      wherein the nutrient medium has a temperature of at least 11°C;
      wherein the nutrient medium has a pH of higher than 2.0;
b) growing a cannabis clone to obtain a grown cannabis plant (growth phase),
   wherein the duration of the growth phase is at least 2 days;
   wherein the cannabis clone is exposed to light with a PPFD to at least 450 µmol*m⁻²*s⁻¹;
   wherein the cannabis clone is exposed to light for at least 6 h per day;
   wherein the cannabis clone is exposed to light with a CCT of at least 2,000 K;
   wherein the ratio of red to green light is at least 1.1:1;
   wherein the ratio of blue to green light is at least 1.1:1;
   wherein the ratio of red to blue light is at least 0.1:1;
   wherein the growth phase is performed in a cleanroom, wherein the cleanroom comprises not more than 100 million particles with a particle size of larger than 0.5 µm per m³ gas mixture;
   wherein the temperature during light exposure is at least 15°C;
   wherein the temperature during absence of light exposure is at least 14°C;
   wherein the indoor room comprises a gas mixture with a humidity of at least 25%;
      wherein the gas mixture exchange rate is at least 3;
   wherein the cannabis clone is exposed to a growth medium,
      wherein the growth medium comprises at least one chelating agent in an amount of at least 0.001 weight-%,
      wherein the growth medium comprises at least one nitrogen source in an amount of at least 0.005 weight-%;
      wherein the growth medium comprises at least one phosphorus source in an amount of at least 0.005 weight-%;
      wherein the growth medium comprises at least one potassium source in an amount of at least 0.005 weight-%;
      wherein the growth medium comprises at least one or more secondary nutrients in sum of at least 0.001 weight-%,
      wherein the growth medium comprises one or more micronutrients in the sum of at least 0.001 weight-%;
      wherein the growth medium comprise one or more carbohydrates in sum in an amount of at least 0.1 weight-%;
      wherein the growth medium comprises one or more amino acids;
      wherein the growth medium comprises at least one vitamin;
      wherein the growth medium comprises at least one vitamin derivative;
      wherein the nutrient medium comprises O₂ in an amount (w/w) of at least 10 ppm;
      wherein the nutrient medium has a temperature of at least 11°C;
      wherein the nutrient medium has a pH of higher than 2.0;
c) subjecting the grown cannabis plant to a flowering phase for obtaining a flowering cannabis plant,
   wherein the duration of the flowering phase is at least 10 days;
   the grown cannabis plant is exposed to light with a PPFD of at least 700 µmol*m⁻²*s⁻¹;
   wherein the grown cannabis plant is exposed to light of at least 6 h per day;
   wherein the grown cannabis plant is exposed to light with a CCT of at least 2,000 K;
   wherein the ratio of red to green light is at least 1.1:1;
   wherein the ratio of blue to green light is at least 1.1:1;
   wherein the ratio of red to blue light is of from 1.2:1;
   wherein the flowering phase is performed in a cleanroom, wherein the cleanroom comprises not more than 100 million particles with a particle size of larger than 0.5 µm per m³ gas mixture;
   wherein the temperature during light exposure is at least 15°C;
   wherein the temperature during absence of light exposure is at least 14°C;
   wherein the indoor room comprises a gas mixture with a humidity of at least 25%;
   wherein the gas mixture exchange rate is at least 3;
   wherein the grown cannabis plant is exposed to a flowering medium,
      wherein the flowering medium comprises at least one chelating agent in an amount of at least 0.001 weight-%,
      wherein the flowering medium comprises at least one nitrogen source in an amount of at least 0.005 weight-%;
      wherein the flowering medium comprises at least one phosphor source in an amount of at least 0.005 weight-%;
      wherein the flowering medium comprises at least one potassium source in an amount of at least 0.005 weight-%;
      wherein the flowering medium comprises at least one or more secondary nutrients in sum of at least 0.001 weight-%,
      wherein the flowering medium comprises one or more micronutrients in the sum of at least 0.001 weight-%;
      wherein the flowering medium comprise one or more carbohydrates in sum in an amount of at least 0.1 weight-%;
      wherein the flowering medium comprises one or more amino acids;
      wherein the flowering medium comprises at least one vitamin;
      wherein the flowering medium comprises at least one vitamin derivative;
      wherein the nutrient medium comprises O₂ in an amount (w/w) of at least 10 ppm;
      wherein the nutrient medium has a temperature of at least 11°C;
      wherein the nutrient medium has a pH of higher than 2.0;
   wherein the grown cannabis plant is exposed to CO₂ gassing, wherein the concentration of CO₂ is at least 500 ppm (v/v) at 26°C ;
   wherein the PPFD exposure of the cannabis plant during the flowering phase compared to the propagation phase is higher by a factor of at least 1.1;
   wherein the PPFD exposure of the cannabis plant during the flowering phase compared to the growth phase is higher by a factor of at least 1.1;
   wherein the CCT during the flowering phase is lower than during the growth phase by a factor of at least 1.05;
   wherein the CCT during the flowering phase is lower than during the propagation phase by a factor of at least 1.05;
   wherein the ratio of red to green light during the flowering phase is higher than the ratio of red to green light during the growth phase by a factor of at least 1.1;
   wherein the ratio of red to green light during the flowering phase is higher than the ratio of red to green light during the propagation phase by a factor of at least 1.1;
   wherein the ratio of blue to green light during the propagation phase is higher than during the flowering phase by a factor of at least 1.1;
   wherein the ratio of blue to green light during the growth phase is higher than during the flowering phase by a factor of at least 1.1;
   wherein the ratio of red to blue light during the flowering phase is higher than during the propagation phase by a factor of at least 1.2;
   wherein the ratio of red to blue light during the flowering phase is higher than during the growth phase by a factor of at least 1.2;
   wherein the temperature during the flowering phase is at least 0.2°C higher than during the growth phase;
   the temperature during the flowering phase is at least 0.2°C higher than during the propagation phase;
   wherein the amount of at least one vitamin in the flowering medium is higher than in the growth medium;
   wherein the amount of at least one micronutrient in the flowering medium is higher than in the growth medium;
   wherein the flowering medium comprise the phosphor source in a weight amount of at least 1.05 times the weight amount of phosphor source in the growth medium;
   weight amount of potassium in the flowering medium exceeds the weight amount of potassium in the growth medium;
   wherein the mean humidity of the gas mixture in the indoor room during the flowering phase is at least 1% higher than during the growth phase;
   wherein the mean humidity of the gas mixture in the indoor room during the flowering phase is at least 1% higher than during the propagation phase;
   wherein the volumetric CO₂ concentration of the gas mixture during the flowering phase is higher than during the growth phase,
d) harvesting cannabis material from the flowering plant to obtain a harvested cannabis material,
   wherein the wet weight of harvested cannabis material is at least 0.4 kg/m²;
e) drying the harvested cannabis material to obtain a dried cannabis material,
   wherein the duration of drying preferably is at least 4 days;
   wherein the temperature is at least 10 °C;
   wherein the indoor room comprises a gas mixture with a humidity of at least 15%;
   wherein the dried cannabis material has a residual water content of at least 3% (w(w);
   wherein the dry weight of harvested cannabis material is at least 50 g/m²;
f) sterilization of the dried cannabis material to obtain a sterilized cannabis material,
   wherein the dried cannabis material is exposed to a temperature of at least 10°C;
   wherein the cannabis material has an upper limit of solvent in an amount of at most 10,000 ppm (w/w);
   wherein the cannabis material has an upper limit of cadmium in an amount of at most 300 ppm (w/w);
   wherein the cannabis material has an upper limit of mercury in an amount of at most 300 ppm (w/w);
   wherein the cannabis material has an upper limit of Aflatoxin B1 in an amount of at most 900 µg/kg;
   wherein the cannabis material has an upper limit of the sum of Aflatoxin B1, Aflatoxin B2, Aflatoxin G1 and Aflatoxin G2 in an amount of at most 900 µg/kg;
   wherein the cannabis material has an upper limit for the Total Aerobic Microbial Count (TAMC) of at most 950,000 CFU/g;
   wherein the cannabis material has an upper limit for the Total Combined Yeast and Mould Count (TYMC) of at most 9,500 CFU/g;
   wherein the cannabis material has an upper limit for the amount of bile salts tolerant Gram-negative bacteria of at most 9,500 CFU/g;
   wherein the cannabis material has an upper limit for the amount of Escherichia coli of at most 2,000 CFU/g;
   and wherein the cannabis material has an upper limit for the amount of Salmonella of at most 2,000 CFU/25g.

In a preferred embodiment, the method comprises the following steps:
An indoor method for producing cannabis material according to at least one of the preceding claims, comprising:
a) subjecting a cannabis cutting to a propagation phase to obtain the cannabis clone,
   wherein the duration of the propagation phase is at least 2 days;
   wherein the cannabis cutting is exposed to light with a PPFD of at least 400 µmol*m⁻²*s⁻¹;
   wherein the cannabis cutting is exposed to light of at least 8 h per day;
   wherein the cannabis cutting is exposed to light with a CCT of at least 2,000 K;
   wherein the ratio of red to green light is at least 1.1:1;
   wherein the ratio of blue to green light is at least 1.1:1;
   wherein the ratio of red to blue light is at least 0.1:1;
   wherein the propagation phase is performed in a cleanroom, wherein the cleanroom comprises not more than 100 million particles with a particle size of larger than 0.5 µm per m³ gas mixture;
   wherein the temperature during light exposure is at least 17.5°C;
   wherein the temperature during absence of light exposure is at least 14°C;
   wherein the indoor room comprises a gas mixture with a humidity of at least 25%;
   wherein the gas mixture exchange rate is at least 3;
   wherein the cannabis cutting is exposed to a propagation medium,
      wherein the propagation medium comprises at least one chelating agent in an amount of at least 0.001 weight-%,
      wherein the propagation medium comprises at least one nitrogen source in an amount of at least 0.005 weight-%;
      wherein the propagation medium comprises at least one phosphorus source in an amount of at least 0.005 weight-%;
      wherein the propagation medium comprises at least one potassium source in an amount of at least 0.005 weight-%;
      wherein the propagation medium comprises at least one or more secondary nutrients in sum of at least 0.001 weight-%,
      wherein the propagation medium comprises one or more micronutrients in the sum of at least 0.001 weight-%;
      wherein the propagation medium comprise one or more carbohydrates in sum in an amount of at least 0.1 weight-%;
      wherein the propagation medium comprises one or more amino acids;
      wherein the propagation medium comprises at least one vitamin;
      wherein the propagation medium comprises at least one vitamin derivative;
      wherein the nutrient medium comprises O₂ in an amount (w/w) of at least 10 ppm;
      wherein the nutrient medium has a temperature of at least 11°C;
      wherein the nutrient medium has a pH of higher than 2.0;
b) growing a cannabis clone to obtain a grown cannabis plant (growth phase),
   wherein the duration of the growth phase is at least 2 days;
   wherein the cannabis clone is exposed to light with a PPFD to at least 450 µmol*m⁻²*s⁻¹;
   wherein the cannabis clone is exposed to light for at least 6 h per day;
   wherein the cannabis clone is exposed to light with a CCT of at least 2,000 K;
   wherein the ratio of red to green light is at least 1.1:1;
   wherein the ratio of blue to green light is at least 1.1:1;
   wherein the ratio of red to blue light is at least 0.1:1;
   wherein the growth phase is performed in a cleanroom, wherein the cleanroom comprises not more than 100 million particles with a particle size of larger than 0.5 µm per m³ gas mixture;
   wherein the temperature during light exposure is at least 15°C;
   wherein the temperature during absence of light exposure is at least 14°C;
   wherein the indoor room comprises a gas mixture with a humidity of at least 25%; w
      herein the gas mixture exchange rate is at least 3;
   wherein the cannabis clone is exposed to a growth medium,
      wherein the growth medium comprises at least one chelating agent in an amount of at least 0.001 weight-%,
      wherein the growth medium comprises at least one nitrogen source in an amount of at least 0.005 weight-%;
      wherein the growth medium comprises at least one phosphor source in an amount of at least 0.005 weight-%;
      wherein the growth medium comprises at least one potassium source in an amount of at least 0.005 weight-%;
      wherein the growth medium comprises at least one or more secondary nutrients in sum of at least 0.001 weight-%,
      wherein the growth medium comprises one or more micronutrients in the sum of at least 0.001 weight-%;
      wherein the growth medium comprise one or more carbohydrates in sum in an amount of at least 0.1 weight-%;
      wherein the growth medium comprises one or more amino acids;
      wherein the growth medium comprises at least one vitamin;
      wherein the growth medium comprises at least one vitamin derivative;
      wherein the nutrient medium comprises O₂ in an amount (w/w) of at least 10 ppm;
      wherein the nutrient medium has a temperature of at least 11°C;
      wherein the nutrient medium has a pH of higher than 2.0;
c) subjecting the grown cannabis plant to a flowering phase for obtaining a flowering cannabis plant,
   wherein the duration of the flowering phase is at least 10 days;
   the grown cannabis plant is exposed to light with a PPFD of at least 700 µmol*m⁻²*s⁻¹;
   wherein the grown cannabis plant is exposed to light of at least 6 h per day;
   wherein the grown cannabis plant is exposed to light with a CCT of at least 2,000 K;
   wherein the ratio of red to green light is at least 1.1:1;
   wherein the ratio of blue to green light is at least 1.1:1;
   wherein the ratio of red to blue light is of from 1.2:1;
   wherein the flowering phase is performed in a cleanroom, wherein the cleanroom comprises not more than 100 million particles with a particle size of larger than 0.5 µm per m³ gas mixture;
   wherein the temperature during light exposure is at least 15°C;
   wherein the temperature during absence of light exposure is at least 14°C;
   wherein the indoor room comprises a gas mixture with a humidity of at least 25%;
   wherein the gas mixture exchange rate is at least 3;
   wherein the grown cannabis plant is exposed to a flowering medium,
      wherein the flowering medium comprises at least one chelating agent in an amount of at least 0.001 weight-%,
      wherein the flowering medium comprises at least one nitrogen source in an amount of at least 0.005 weight-%;
      wherein the flowering medium comprises at least one phosphorus source in an amount of at least 0.005 weight-%;
      wherein the flowering medium comprises at least one potassium source in an amount of at least 0.005 weight-%;
      wherein the flowering medium comprises at least one or more secondary nutrients in sum of at least 0.001 weight-%,
      wherein the flowering medium comprises one or more micronutrients in the sum of at least 0.001 weight-%;
      wherein the flowering medium comprise one or more carbohydrates in sum in an amount of at least 0.1 weight-%;
      wherein the flowering medium comprises one or more amino acids;
      wherein the flowering medium comprises at least one vitamin;
      wherein the flowering medium comprises at least one vitamin derivative;
      wherein the nutrient medium comprises O₂ in an amount (w/w) of at least 10 ppm;
      wherein the nutrient medium has a temperature of at least 11°C;
      wherein the nutrient medium has a pH of higher than 2.0;
      wherein the grown cannabis plant is exposed to CO₂ gassing, wherein the concentration of CO₂ is at least 500 ppm (v/v) at 26°C ;
   wherein the PPFD exposure of the cannabis plant during the flowering phase compared to the propagation phase is higher by a factor of at least 1.1;
   wherein the PPFD exposure of the cannabis plant during the flowering phase compared to the growth phase is higher by a factor of at least 1.1;
   wherein the CCT during the flowering phase is lower than during the growth phase by a factor of at least 1.05;
   wherein the CCT during the flowering phase is lower than during the propagation phase by a factor of at least 1.05;
   wherein the ratio of red to green light during the flowering phase is higher than the ratio of red to green light during the growth phase by a factor of at least 1.1;
   wherein the ratio of red to green light during the flowering phase is higher than the ratio of red to green light during the propagation phase by a factor of at least 1.1;
   wherein the ratio of blue to green light during the propagation phase is higher than during the flowering phase by a factor of at least 1.1;
   wherein the ratio of blue to green light during the growth phase is higher than during the flowering phase by a factor of at least 1.1;
   wherein the ratio of red to blue light during the flowering phase is higher than during the propagation phase by a factor of at least 1.2;
   wherein the ratio of red to blue light during the flowering phase is higher than during the growth phase by a factor of at least 1.2;
   wherein the temperature during the flowering phase is at least 0.2°C higher than during the growth phase;
   the temperature during the flowering phase is at least 0.2°C higher than during the propagation phase;
   wherein the amount of at least one vitamin in the flowering medium is higher than in the growth medium;
   wherein the amount of at least one micronutrient in the flowering medium is higher than in the growth medium;
   wherein the flowering medium comprise the phosphor source in a weight amount of at least 1.05 times the weight amount of phosphor source in the growth medium;
   weight amount of potassium in the flowering medium exceeds the weight amount of potassium in the growth medium;
   wherein the mean humidity of the gas mixture in the indoor room during the flowering phase is at least 1% higher than during the growth phase;
   wherein the mean humidity of the gas mixture in the indoor room during the flowering phase is at least 1% higher than during the propagation phase;
   wherein the volumetric CO₂ concentration of the gas mixture during the flowering phase is higher than during the growth phase,
d) harvesting cannabis material from the flowering plant to obtain a harvested cannabis material,
   wherein the wet weight of harvested cannabis material is at least 0.4 kg/m²;
e) drying the harvested cannabis material to obtain a dried cannabis material,
   wherein the duration of drying preferably is at least 4 days;
   wherein the temperature is at least 10 °C;
   wherein the indoor room comprises a gas mixture with a humidity of at least 15%;
   wherein the dried cannabis material has a residual water content of at least 3% (w(w);
   wherein the dry weight of harvested cannabis material is at least 50 g/m²;
f) sterilization of the dried cannabis material to obtain a sterilized cannabis material,
   wherein the dried cannabis material is exposed to a temperature of at least 10°C;
g) extraction from the sterilized cannabis plant material to obtain a cannabis extract
   wherein solvents are used for extraction;
   wherein the cannabis material has an upper limit of solvent in an amount of at most 10,000 ppm (w/w);
   wherein the cannabis material has an upper limit of cadmium in an amount of at most 300 ppm (w/w);
   wherein the cannabis material has an upper limit of mercury in an amount of at most 300 ppm (w/w);
   wherein the cannabis material has an upper limit of Aflatoxin B1 in an amount of at most 900 µg/kg;
   wherein the cannabis material has an upper limit of the sum of Aflatoxin B1, Aflatoxin B2, Aflatoxin G1 and Aflatoxin G2 in an amount of at most 900 µg/kg;
   wherein the cannabis material has an upper limit for the Total Aerobic Microbial Count (TAMC) of at most 950,000 CFU/g;
   wherein the cannabis material has an upper limit for the Total Combined Yeast and Mould Count (TYMC) of at most 9,500 CFU/g;
   wherein the cannabis material has an upper limit for the amount of bile salts tolerant Gram-negative bacteria of at most 9,500 CFU/g;
   wherein the cannabis material has an upper limit for the amount of Escherichia coli of at most 2,000 CFU/g;
   and wherein the cannabis material has an upper limit for the amount of Salmonella of at most 2,000 CFU/25g.

### Examples

### Example 1

Cannabis plants of one breed are grown from seeds. From each of the cannabis plants, cuttings are cut from the shoots of the plants and are cultivated in propagators and afterwards put into the growth and flowering room. All rooms are ISO 8 cleanroom. Roots, growing behaviour, health of the plants and quality of the flowers are observed and the best rated cannabis plants are chosen as mother plants. From each mother plant, cuttings are cut from the shoots to obtain further mother plants of one breed. The mother plants are exposed to 18 hours light per day and are grown in a hydroponic dripping system in airpots. Every four weeks cuttings are obtained from shoots of the mother plants for growing new cannabis plants for harvesting of flowers.

### Example 2

Cuttings are obtained from mother plants and transplanted into propagators. The plants are kept in the propagators for 10-14 days. During the first 5-7 days the plants are exposed to a humidity of 60-80%. After 10-14 days the plants are transplanted into net pots in a nutrient film technique (NFT) system for hydroponic growing. The plants are kept in a growth room for 7 days. The plants are kept in the NFT system and are transferred to a flowering room where they are kept for 8 weeks. The plants are exposed to 12 hours light per day. All steps are performed in ISO 8 cleanrooms.

### Example 3

Cuttings are transplanted into airpots and are kept in a ISO 8 cleanroomfor 7 days. The cuttings are exposed to light with a PPFD of 800 µmol*m⁻²*s⁻¹for 18 hours per day. The temperature in the propagation room is 22°C during light exposure and 18°C in the absence of light exposure. The humidity in the propagation room is 65% and the cuttings are sprayed with a nutrient medium which has a temperature of 21°C. The nutrient medium comprises boron, copper, iron, manganese, molybdane, zinc, EDTA, glycine, histidine, tryptophane, tyrosine, vitamin B1, vitamin B2, folate, myo-inositol, para-aminobenzoic acid and adenosine. After 7 days the plants have grown into a small plant with long and relatively strong roots. Afterwards the small plants are kept in an ISO 8 cleanroom for 14 days to grow into larger plants. During this growing phase the plants are trained with the "Sea of green" (SOG) method. The plants are exposed to light with a PPFD of 1000 µmol*m⁻²*s⁻¹ for 18 hours per day. The temperature during absence of light exposure is kept at 18°C and during light exposure at 22°C. The room has a humidity of 45%. The plants are sprayed with a nutrient medium which has a temperature of 21°C. The nutrient medium contains urea, nitrate, ammonium, P₂O₅, K₂O, magnesium, calcium, sulfate, boron, copper, iron, manganese, molybdane, zinc, EDTA, glycine, histidine, tyrosin, vitamin B1, vitamin B2, vitamin B3, myo-insotol, para-aminobenzoic acid and adenosin. Afterwards the plants are kept in a ISO 8 cleanroom for 8 weeks for flowering. The plants are exposed to light with a PPFD of 1500 µmol*m⁻²*s⁻¹ for 12 hours per day The temperature is kept at 24°C during light exposure and at 20°C during absence of light exposure. The humidity in the room is set to 35%.. During light exposure the plants are exposed to 1300 ppm (v/v) of CO₂. The plants are sprayed with a nutrient medium which has a temperature of 21°C. The nutrient medium contains nitrate, urea, ammonium, P₂O₅, K₂O, MgO, CaO, EDTA, iron, boron, manganese, zinc, copper, molybdenum, vitamin B1, vitamin B2, vitamin B6, glycine, histidine, tyrosine, myo-insotiol, para-aminobenzoic acid and adenosin. During the second half of the flowering, plants are additionally sprayed with a nutrient medium comprising sugar cane syrup, fruit extract and fruit enzymes.

The flowers are cut off at the lower part of the main stem and hanged upside down. Then the flowers are cut off from the upside-down hanging plant and collected in harvesting boxes. During this process large leaves are separated. Then the flowers are put into a cutting machine where residual smaller leaves and unwanted parts of stems are separated from the flowers. The pure flowers are then put into collecting boxes and transferred to an ISO 8 cleanroom for drying. The drying room is kept dark and the has a humidity of 47% and at a temperature of 20°C. After 21 days of drying, the flowers are sterilized by exposure to H₂O₂ for 17 minutes.

### Example 4

Seedlings are grown at 22°C during lighting and 18°C during absence of lighting in an ISO8 cleanroom. The seedlings are exposed to light for 18 hours light per day for 3-6 weeks. During this time, the plants built up a branched root system and grow slowly. At the end of this phase the plants start to grow faster and build up larger and more leaves. They are transferred to a separate ISO8 cleanroom to grow into mother plants with a height of less than 1 m. The mother plants are kept in airpots at 22°C during lighting and 18°C during absence of lighting, at a humidity of 45-50% and a temperature of nutrient medium of 21-22°C. Only female plants are used to give rise to mother plants. The mother plants are topped during the growth phase to become shrubby with many lateral branches and twigs. For that the main shoot is shortened to form several small shoots. Thereby the mother plant gives rise to more than 20 cuttings.

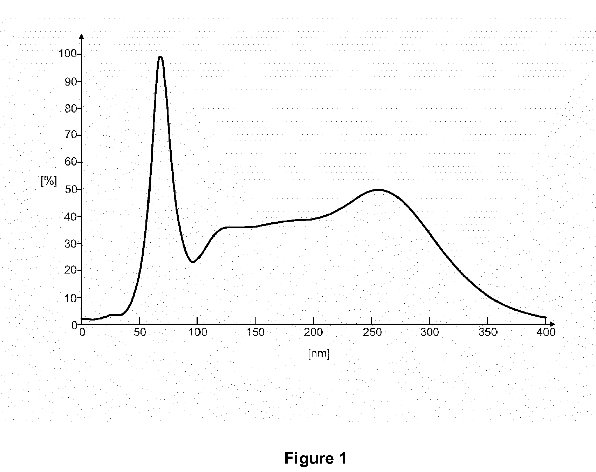

Cuttings with a size of 10cm-15cm of the tip of a shoot are cut off and put into a propagator with a root gel in an airoponic system. The roots are continuously sprayed with medium. The propagation room is an ISO8 cleanroom and the temperature is kept at 22°C during lighting and 18°C during absence of lighting. The cuttings are exposed to light with a PPFD of 2384 µmol*m⁻²*s⁻¹ at 30 cm below the light source in an area of 1m². The color temperature of the light source is 6500 k. The cuttings are exposed to a light spectrum as shown in Figure 1. The red to blue ratio is 0.46, the blue to green ratio is 2,67 and the red to green ratio is 1,22. The cuttings are exposed to an air humidity 65-70°C. After around 10-14 days roots are formed and the cuttings develop into small plants. After forming a wide network of roots, the small plants are transplanted into the NFT system and transferred to a growth room which is an ISO8 cleanroom.

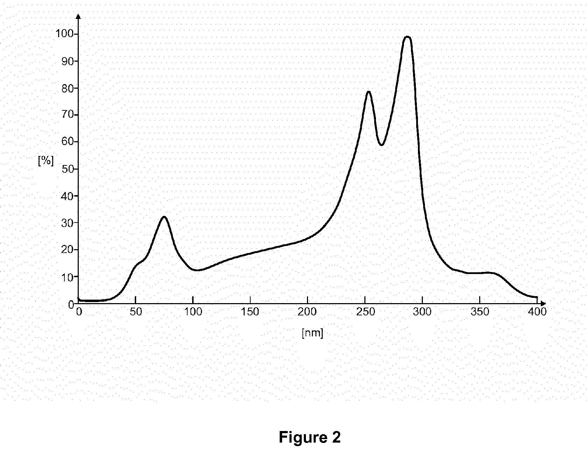

During the growth phase the plants are exposed to 18 hours lighting per day. The plants are exposed to light with a PPFD of 2384 µmol*m⁻²*s⁻¹ at 30 cm below the light source in an area of 1m². The color temperature of the light source is 5000 k. The light spectrum is shown in Figure 2. The red to blue ratio is 0.44, the blue to green ratio is 5, the red to green ratio is 2,2. The air temperature in the growth room is 22°C during lighting and 18°C during absence of lighting. The temperature of the nutrition medium is kept at 21-22°C. The Sea-of-Green (SOG) method is applied. Thereby the plants are kept at a small height of less than 1 m the plants grow one main stem and only a small amount of lateral stems and twigs. After one week, the lighting duration is shortened to 12 hours per day. In the growth and in the flowering room the plants are in netpots in an NFT system. The cannabis plants are sprinkled at the roots at each netpot. Pumps regulate the throughput speed and the water level of the irrigation system of the netpot carriages. The tanks for medium have aeration stones to enrich the medium with O₂.

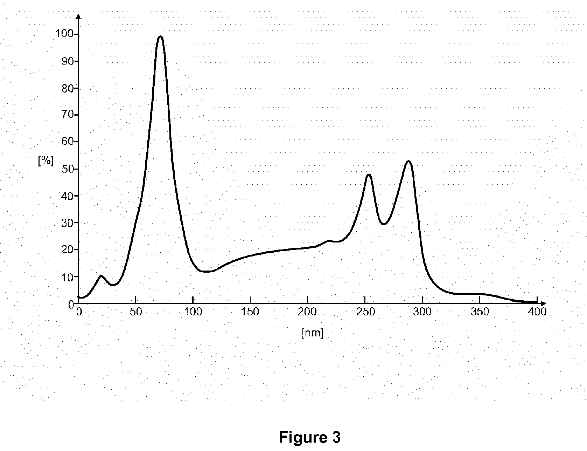

The plants start to flower 1-3 weeks after changing lighting from 18 hours to 12 hours per day. The plants are kept for 8 weeks in an ISO8 Cleanroom for flowering. The flowering room has a HVAC system for a CO₂ gas supply from ceiling. The CO₂ concentration in the flowering room is 900 ppm at 24°C during lighting and was increased up to a maximum of 1300 ppm at 26°C during lighting. The plants are exposed to light with a PPFD of 2662 µmol*m⁻²*s⁻¹ at 30 cm below the light source in an area of 0.5m². The color temperature of the light source is 3000k. The light spectrum is shown in Figure 3. The red to blue ratio is 2.9, the blue to green ratio is 1.5, the red to green ratio is 4.35.

The CO₂ falls down from the ceiling on to the leaves of the plants where it is absorbed. The temperature during absence of lighting is 20°C and the humidity is 30-40%. The temperature of the nutrient medium is 21°C. The plants are harvested 6-12 weeks after change of lighting. During the end of the flowering the color and structure of the trichomes of the cannabis plants are observed with portable microscopes for the optimal harvesting time. Trichomes are harvested when they are turning from a milky color into a brown color.

For harvesting the cannabis plant is cut off at its main stem. The plants hang upside down at a harvesting rack. The temperature is kept at 18-23°C and the air humditiy around 50%. Lighting is kept low. With a clipper the large leaves are cut off. Afterwards middle sized leaves and loose leaves are clipped off. Afterwards residual leaves and plant parts besides flowers are cut off with a tumbling machine with rotary blades. Thereby buds are separated from the leaves. The buds are then put into drying boxes on drying racks and brought into an ISO8 cleanroom for drying. Drying is done at a humidity of 45-55% and 18-23°C. The drying room has a fully automated HVAC system and additionally ventilators. The drying room is kept dark. Drying is done for 2-3 weeks.

### Example 5

Extraction of active ingredients can be carried out as follows. The cannabis plants are grown and the flowers are harvested and cut as described in the previous examples. Afterwards the flowers are dried at 47% air humidity and 20°C in darkness in an ISO8 cleanroom. The flowers are dried until a residual water content of 15%. These drying conditions improve the effect of the isolated cannabinoid, improve the taste of the isolated cannabinoid and reduced the risk of moulding. After drying the flowers are sterilized at 31°C under 600 Pascal for 20 minutes. Afterwards the flowers are packed in bags with a semipermeable membrane and exposed to hydrogen peroxide until the inner part of the flowers are sterilized. After sterilization the flowers are and sieved to yield small pieces of 2-3 mm. The sieved flowers are heated at 105°C for 15 minutes to allow decarboxylation of cannabinoids converting the acidic form of cannabinoids into a neutral form. A second heating step at 120°C for 60 minutes is carried out to thoroughly decarboxylate acidic cannabinoids. For extraction liquid CO₂ is pressed through the sieved flowers at 60°C at 25 MPa for 8 times. In a knockout-vessel CBD is separated at 6 MPa at 50°C. Afterwards the extract is heated to 40°C and mixed with Ethanol. The mixture is winterized at - 25°C for 52 hours and subsequently vacuum filtrated. Solvents are then evaporated in an rotary evaporator under a vapor temperature of 40°C, a waterbath temperature of 60°C and under vacuum. The extract contains high amounts of CBD.

### Example 6

A cutting from a mother plant is subjected to propagation for 14 days. The cutting builts up a large network of roots. The plant is subjected to a growth phase for 7 days. The cannabis plant is grown by the SOG method. Flowers are harvested after 56 days. The harvested wet weight is 2.1 kg*m⁻². The cannabis material is dried for 21 days. Drying is performed at 21°C and the air has a humidity of 48%. After drying, the dry weight is 412 g*m⁻². The dried cannabis flowers were sterilized with H₂O₂ for 17 minutes at 29,44 - 32,78°C at 130660 Pascal.

### Example 7

A cannabis cutting is subjected to 7 days propagation phase at 22°C during lighting and 18°C during absence of lighting. Humidity of the gas mixture is 68%. The temperature of the nutrient medium is 21°C. After the propagation phase the cannabis clone is subjected to 7 days growth phase at 22°C during lighting and 18°C during absence of lighting. Humidity of the gas mixture is 48%. The temperature of the nutrient medium is 21°C. Afterwards the grown cannabis plant is subjected to 56 days flowering phase at 24°C during lighting and 20°C during absence of lighting. Humidity of the gas mixture is 37%. The temperature of the nutrient medium is 21 °C. During the flowering phase the lighting is 12h per day. During the flowering phase the cannabis plant is exposed to CO₂ gassing during lighting. The temperature during the flowering phase is 26°C.

### Description of the figures

- **Figure 1**: shows the light intensity at different wavelengths during the propagation phase.
- **Figure 2**: shows the light intensity at different wavelengths during the growth phase.
- **Figure 3**: shows the light intensity at different wavelengths during the flowering phase.

## Claims

1. An indoor method for producing cannabis material, comprising:
a) growing a cannabis clone to obtain a grown cannabis plant,
wherein the cannabis clone is exposed to light within the wavelength range of from 350 nm to 800 nm,
wherein the cannabis clone is exposed to growth medium comprising at least one vitamin,
b) subjecting the grown cannabis plant to a flowering phase for obtaining a flowering cannabis plant,
wherein the grown cannabis plant is exposed to light within the wavelength range of from 350 nm to 800 nm,
wherein the grown cannabis plant is exposed to a gas mixture having a volume ratio of CO₂/O₂ of at least 0.0025,
wherein the grown cannabis plant is exposed to a flowering medium comprising at least one vitamin,
c) harvesting cannabis material from the flowering plant to obtain a harvested cannabis material,
wherein the ratio of red to blue light during the flowering phase is higher than during the growth phase,
wherein the amount of at least one vitamin in the flowering medium is higher than in the growth medium.

2. A method according to claim 1, wherein the method further comprises drying the harvested cannabis material to obtain a dried cannabis material; and wherein the method further comprises sterilization of the dried cannabis material to obtain a sterilized cannabis material.

3. Method according to at least one of the preceding claims, wherein the growth and/or flowering phase is performed in a cleanroom, wherein the cleanroom atmosphere comprises not more than 100 million particles with a particle size of larger than 0.5 µm per m³ gas mixture.

4. Method according to at least one of the preceding claims, wherein the growth and/or flowering phase is performed in a cleanroom, wherein the cleanroom is **characterized by** a particle amount equivalent to at least an ISO 9 cleanroom.

5. Method according to at least one of the preceding claims, wherein the gas mixture exchange rate in the indoor room is at least 5 per hour.

6. Method according to at least one of the preceding claims, wherein the ratio of red to green light during the flowering phase is higher than the ratio of red to green light during the growth phase.

7. Method according to at least one of the preceding claims, wherein the pH of the growth medium is lower than the pH of the flowering medium.

8. Method according to at least one of the preceding claims, wherein the flowering medium comprises phosphate in a weight concentration of at least 1.05 times the weight concentration of phosphate in the growth medium.

9. Method according to at least one of the preceding claims, wherein the weight concentration of potassium in the flowering medium exceeds the weight concentration of potassium in the growth medium by a factor of at least 1.05.

10. Method according to at least one of the preceding claims, wherein the flowering medium comprises a higher weight amount of magnesium than calcium.

11. Method according to at least one of the preceding claims, wherein the flowering medium comprises myo-inositol.

12. Method according to at least one of the preceding claims, wherein the photosynthetic photon flux density (PPFD) exposure of the cannabis plants during the flowering phase compared to the growth phase is higher by a factor of at least 1.1.

13. Method according to at least one of the preceding claims, wherein the flowering cannabis plant is exposed to light with a correlated color temperature (CCT) of at least 2,000 K.

14. An indoor method for producing cannabis material according to at least one of the preceding claims, comprising:
a) growing a cannabis clone to obtain a grown cannabis plant,
wherein the cannabis clone is exposed to light within the wavelength range of from 350 nm to 800 nm, and with a CCT of from 3,400 K to 8,000 K,
wherein the cannabis clone is exposed to growth medium comprising at least one vitamin,
wherein the growth phase is performed in a cleanroom, wherein the cleanroom comprises not more than 100 million particles with a particle size of larger than 0.5 µm per m³ gas mixture;
b) subjecting the grown cannabis plant to a flowering phase for obtaining a flowering cannabis plant,
wherein the grown cannabis plant is exposed to light within the wavelength range of from 350 nm to 800 nm, and with a CCT of from 2,000 K to 7,000K,
wherein the grown cannabis plant is exposed to a gas mixture having a volume ratio of CO₂/O₂ of at least 0.0025,
wherein the grown cannabis plant is exposed to a flowering medium comprising at least one vitamin,
wherein the flowering phase is performed in a cleanroom, wherein the cleanroom comprises not more than 100 million particles with a particle size of larger than 0.5 µm per m³ gas mixture,
wherein the ratio of red to blue light during the flowering phase is higher than during the growth phase by a factor of at least 1.2,
wherein the volumetric CO₂ concentration of the gas mixture during the flowering phase is higher than during the growth phase,
wherein the amount of at least one vitamin in flowering medium is higher than in the growth medium.

15. Cannabis material obtainable by a method according to at least one of the preceding claims, wherein the cannabis material has an upper limit for the Total Aerobic Microbial Count (TAMC) of at most 950,000 CFU/g.
